# EUROPEAN PATENT SPECIFICATION

(11) **EP 1 612 456 B1**
(45) Date of publication and mention of the grant of the patent: **07.03.2018**
(21) Application number: 05014479.9
(22) Date of filing: 04.07.2005
(51) Int. Cl.: F16H 61/662

(54) **Vehicle and method of controlling a vehicle**
Fahrzeug und Verfahren zur Steuerung eines Fahrzeugs
Véhicule et méthode pour commander un véhicule

(30) Priority: 02.07.2004 JP 2004196903; 03.02.2005 JP 2005027136
(43) Date of publication of application: 04.01.2006
(73) Proprietor: Yamaha Hatsudoki Kabushiki Kaisha, Iwata-shi, Shizuoka-ken (JP)
(72) Inventor: Unno, Toshio Yamaha Hatsudoki Kabushiki Kaisha, Iwata-shi Shizuoka-ken (JP); Sakaue, Masaya Yamaha Hatsudoki Kabushiki Kaisha, Iwata-shi Shizuoka-ken (JP); Asaoka, Ryousuke Yamaha Hatsudoki Kabushiki Kaisha, Iwata-shi Shizuoka-ken (JP)
(74) Representative: Grünecker Patent- und Rechtsanwälte PartG mbB

(56) References cited:
- EP-A2- 1 291 558
- JP-A- 62 273 187
- US-A1- 2002 032 088

## Description

The present invention relates to a vehicle according to the preamble of independent claim 1 and a method of controlling a vehicle, and it particularly relates to a vehicle having a continuously variable transmission. A vehicle and respective method of controlling a vehicle can be taken from the prior art document EP 1291 558 A2.

Prior art document US 2002/0032088 A1, which is considered being the closest prior art and which shows the preamble of claim 1, describes a vehicle embodied as a motorcycle having an engine and a continuously variable transmission ("CVT"). The CVT includes a drive pulley adapted to connect to a crankshaft of an engine. The drive pulley has inner and outer halves with belt engagement surfaces to engage the sides of the belt. The drive pulley of the CVT also includes a slide sleeve disposed on the shaft adapted to engage an inner side of a belt. The inner and outer halves of the drive pulley are biased apart from one another by a spring. The slide sleeve engages the belt when the belt is stationary or traveling at low speeds. The driven pulley includes inner and outer halves with belt engagement surfaces. The two halves are biased into contact with one another. A connector connects the inner half to the outer half. In addition, a pneumatically-actuated driven pulley is described together with a CVT incorporating same. Said vehicle comprises means which allows a negative torque transmission to be used for starting the engine by pushing the vehicle or used as a brake assembly.

In a background art, as a vehicle having a continuously variable transmission, a scooter type motor cycle is known. According to the scooter type motor cycle, a continuously variable transmission of a V belt type, a troidal type or the like is used.

According to such a scooter type motor cycle having the continuously variable transmission, in normal running, an optimum target gear ratio (target engine rotational speed) is calculated from a throttle opening degree (accelerator opening degree) and a vehicle speed or the like, and an actual gear ratio is controlled to be the calculated target gear ratio. In this case, in a state in which the motor cycle is stopped (state in which the vehicle speed is 0), the gear ratio of the continuously variable transmission normally becomes low (maximum gear ratio). Thereby, in starting at a next time after stopping the motor cycle, normally, the gear ratio of the continuously variable transmission becomes low. When an engine is started in the state in which the gear ratio is low in this way, an engine output is converted to provide a large torque to be transmitted to a rear wheel and therefore, a load of the engine in starting is alleviated.

However, according to the above-described motor cycle having the continuously variable transmission of the background art, when a driver cuts a main switch in running the motor cycle, the engine is stopped and a speed change control is interrupted in a state of the gear ratio other than low. When the engine is stopped by setting the gear ratio to the state other than low in this way, when the engine is started by intending to start the motor cycle at a next time, the torque transmitted to the rear wheel is small and therefore, the load of the engine is increased to bring about a drawback that smooth starting is hampered.

Hence, in the Japanese Patent Publication No. 2584618, there is proposed a technology of resolving such a drawback, wherein a motor cycle constituted such that when a gear ratio of a continuously variable transmission is not low after stopping an engine, the engine is started after forcibly returning the gear ratio of the continuously variable transmission to low in starting operation at a next time. Accordingly, by starting the engine after returning the gear ratio to low in the starting operation in this way, even when a speed change control is interrupted in a state in which the gear ratio is other than low by making a main switch OFF by a driver in running, the load of the engine can be restrained from being increased in starting at a next time.

However, whereas in Japanese Patent Publication No. 2584618, the load of the engine can be restrained from being increased in the starting operation, the engine is started after returning the gear ratio of the continuously variable transmission to low in the starting operation and therefore, there is brought about a drawback that a time period until starting after the starting operation is prolonged. Therefore, there poses a problem that it is difficult to carry out smooth starting.

Further, in Japanese Patent Publication No. 2584618, the control of returning the gear ratio of the continuously variable transmission to low in the starting operation at a next time after stopping the motor cycle and therefore, even when the speed change control is interrupted in the state of the gear ratio other than low by making the main switch OFF in running, the speed change control to low is not carried out until the starting operation at a next time. Therefore, when the main switch is made OFF in running the motor cycle, the motor cycle is run by inertia while the gear ratio is fixed to a gear ratio of a top side other than low. In a state in which the gear ratio is fixed to the gear ratio of the top side in this way, there poses a problem that engine brake is difficult to work.

The invention has been carried out in order to resolve the above-described problem and it is an object of the invention to provide a vehicle and a method for controlling such a vehicle capable of pertinently setting a gear ratio when a driver cuts a main switch in running.

For the apparatus aspect, this objective is solved by a vehicle in particular a motor cycle, comprising a drive force generating means, a first switch for controlling said drive force generating means by a driver, a continuously variable transmission for transmitting a drive force generated by the drive force generating means to a drive wheel, and a speed change controlling means for controlling a gear ratio of the continuously variable transmission and continuously controlling the gear ratio of the continuously variable transmission after the drive force generating means is instructed to stop by switching the first switch to an "OFF"-state.

According to a preferred embodiment, the speed change controlling means controls the continuously variable transmission when a vehicle speed is larger than a predetermined speed value after the drive force generating means is instructed to stop by switching the first switch to the "OFF"-state.

Therein, it is preferable if the speed change controlling means controls the continuously variable transmission based on a map for a speed change control when the vehicle speed is larger than the predetermined speed value after the drive force generating means is instructed to stop by switching the first switch to the "OFF"-state.

Instead, the speed change controlling means could set a target gear ratio of the continuously variable transmission to a value on a low side when the vehicle speed is larger than the predetermined speed value after the drive force generating means is instructed to stop by switching the first switch to the "OFF"-state.

According to a further preferred embodiment, when the gear ratio becomes a predetermined gear ratio value on a low side after the drive force generating means is instructed to stop by switching the first switch to the "OFF"-state, the speed change controlling means maintains the predetermined gear ratio on the low side until the vehicle speed becomes equal to or smaller than the predetermined speed value.

Beneficially, the present vehicle is provided with a power supplying means for supplying a power to the speed change controlling means.

Therein, it is further beneficial if the power supplying means maintains to supply the power to the speed change controlling means to continue a speed change control when a vehicle speed is larger than a predetermined speed value after the drive force generating means is instructed to stop by switching the first switch (18) to the "OFF"-state.

Moreover, it is still further preferable if there is provided a second switch connected between the power supplying means and the speed change controlling means and made to be in an "ON"-state in response to switching the first switch to the "ON"-state, wherein when the vehicle speed is larger than the predetermined speed value after the drive force generating means is instructed to stop by switching the first switch to the "OFF"-state, the speed change controlling means maintains an "ON"-state of the second switch and brings the second switch into an "OFF"-state when the vehicle speed becomes equal to or smaller than the predetermined value.

It is preferable if the predetermined speed value of the vehicle speed is zero.

According to another preferred embodiment, the speed change controlling means continuously controls the gear ratio by setting a target gear ratio of the continuously variable transmission to a predetermined gear ratio value on a low side when the gear ratio becomes the predetermined gear ratio value on the low side.

According to yet another preferred embodiment, the continuously variable transmission includes a first drive force transmitting means transmitted with a drive force from the drive force generating means and a second drive force transmitting means for transmitting the drive force from the first drive force transmitting means to the drive wheel, wherein the speed change controlling means continuously controls the gear ratio of the continuously variable transmission by detecting rotation of at least one of the first drive force transmitting means and the second drive force transmitting means.

Therein, it is further preferable if the speed change controlling means stops to control the continuously variable transmission when a rotational speed of at least one of the first drive force transmitting means and the second drive force transmitting means becomes equal to or smaller than a predetermined speed value.

Moreover, it is yet further preferable if there is provided a clutch arranged at either one of between the second drive force transmitting means and the drive wheel or between the drive force generating means and the first drive force transmitting means. Therein it is also preferable if the clutch is arranged between the second drive force transmitting means and the drive wheel, wherein the speed change controlling means continuously controls the continuously variable transmission by detecting rotation of the drive force generating means and stops to control the continuously variable transmission when a rotational speed of the drive force generating means becomes equal to or smaller than a predetermined speed value.

Beneficially, the speed change controlling means is adapted to stop to control the continuously variable transmission when a rotational speed of the first drive force transmitting means becomes equal to or smaller than a predetermined speed value.

According to another preferred embodiment, the clutch is arranged between the drive force generating means and the first drive force transmitting means, wherein the speed change controlling means continuously controls the continuously variable transmission by detecting rotation of the first drive force transmitting means.

Preferably, the predetermined speed value is zero.

Further preferably, the continuously variable transmission is an electrically controlled belt type continuously variable transmission.

Therein, a belt member of the belt type continuously variable transmission may be formed by an elastomer.

According to still another preferred embodiment, the speed change controlling means controls the gear ratio of the continuously variable transmission by electrically controlling only either one of the first drive force transmitting means and the second drive force transmitting means.

According to the method aspect, the objective is solved by a method of controlling a vehicle, in particular a motor cycle, having a continuously variable transmission, wherein a gear ratio of the continuously variable transmission is continued to be controlled after an engine of the vehicle is instructed to stop during a running state of the engine.

It is preferable if the control of the gear ratio is stopped when the vehicle speed has dropped below a predetermined speed threshold value, in particular zero.

It is further preferable if the gear ratio is shifted during the continued control period to the low side of the transmission.

In the following, the present invention is explained in greater detail with respect to several embodiments thereof in conjunction with the accompanying drawings, wherein:
- Fig. 1: is a side view showing a total structure of a motor cycle according to a first embodiment;
- Fig. 2: is a view for explaining a speed change control of a continuously variable transmission of the motor cycle according to the first embodiment shown in Fig. 1;
- Fig. 3: is a sectional view for explaining a detailed structure of the continuously variable transmission of the motor cycle according to the first embodiment shown in Fig. 1;
- Fig.4: is a sectional view for explaining a detailed structure of a clutch of the continuously variable transmission of the motor cycle according to the first embodiment shown in Fig. 1;
- Fig. 5: is a sectional view for explaining the detailed structure of the clutch of the continuously variable transmission of the motor cycle according to the first embodiment shown in Fig. 1;
- Fig. 6: is a timing chart showing a state of a relay switch and a voltage of a switch line when a main switch is made OFF in a state in which a vehicle speed of the motor cycle according to the first embodiment shown in Fig. 1 is larger than 0 km/h (running state);
- Fig. 7: is a timing chart showing a state of the relay switch and the voltage of the switch line when the main switch is made OFF in a state in which the vehicle speed of the motor cycle according to the first embodiment shown in Fig. 1 is 0 km/h (stationary state);
- Fig. 8: is a diagram for explaining a method of controlling the continuously variable transmission of a speed change control apparatus of the motor cycle according to the first embodiment shown in Fig. 1;
- Fig. 9: is a diagram showing a three-dimensional control map of the speed change control apparatus of the motor cycle according to the first embodiment shown in Fig. 1;
- Fig. 10: is a diagram showing a processing flow of the speed change control apparatus when the main switch is made OFF according to the first embodiment shown in Fig. 1;
- Fig. 11: is a diagram showing a processing flow of a speed change control apparatus when the main switch is made OFF according to a second embodiment;
- Fig. 12: is a diagram showing a processing flow of a speed change control apparatus when the main switch is made OFF according to a third embodiment;
- Fig. 13: is a diagram for explaining a speed change control of a continuously variable transmission of a motor cycle according to a fourth embodiment;
- Fig. 14: is a diagram showing a processing flow of a speed change control apparatus when the main switch is made OFF according to the fourth embodiment;
- Fig. 15: is a diagram showing a processing flow of a speed change control apparatus when the main switch is made OFF according to a fifth embodiment;
- Fig. 16: is a diagram showing a processing flow of a speed change control apparatus when the main switch is made OFF according to a sixth embodiment;
- Fig. 17: is a diagram showing a processing flow of a speed change control apparatus when the main switch is made OFF according to a seventh embodiment; and
- Fig. 18: is a diagram showing a processing flow of a speed change control apparatus when the main switch is made OFF according to an eighth embodiment;

Embodiments will be explained in reference to the drawings as follows.

### (First Embodiment)

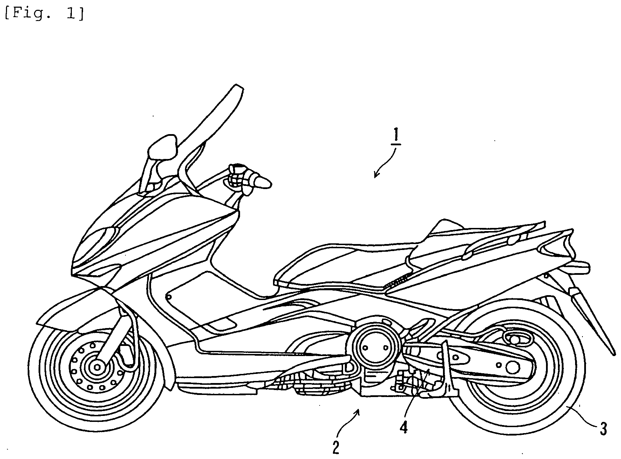

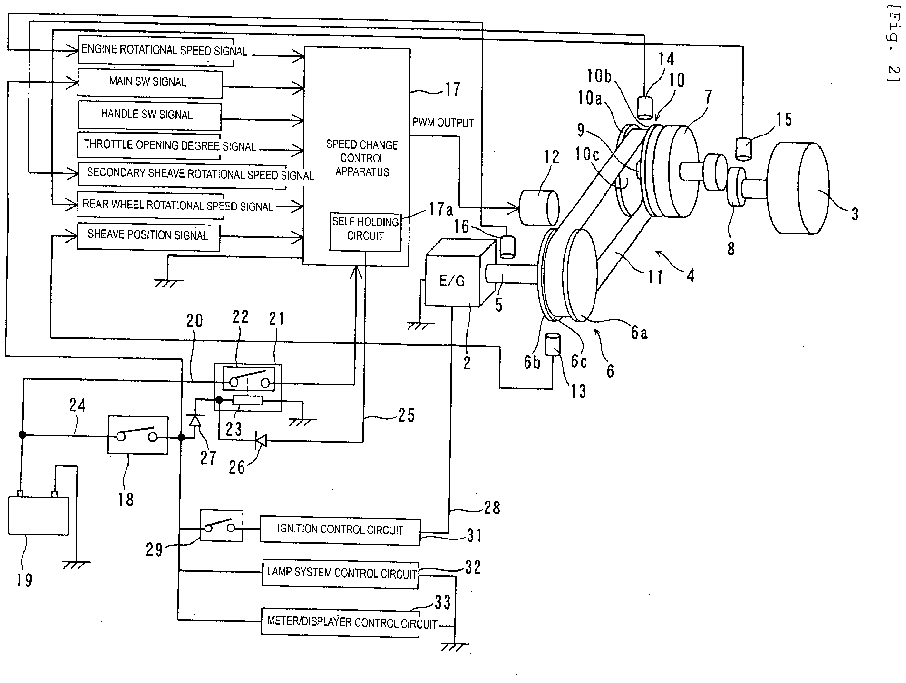

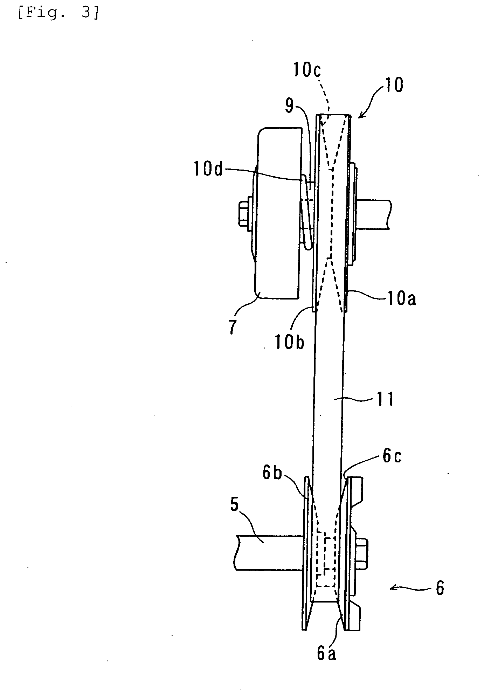

Fig. 1 is a side view showing a total structure of a motor cycle according to a first embodiment. Fig. 2 is a view for explaining a speed change control of a continuously variable transmission of the motor cycle according to the first embodiment shown in Fig. 1. Fig. 3 through Fig. 5 are views for explaining structures of the continuously variable transmission and a centrifugal clutch of the motor cycle according to the first embodiment shown in Fig. 1. The structure of the motor cycle according to the first embodiment will be explained in reference to Fig. 1 through Fig. 5. Further, according to the first embodiment, the motor cycle of a scooter type will be explained as an example of a vehicle embodying the teaching of the present invention.

As shown by Fig. 1, a motor cycle 1 of a scooter type according to the first embodiment is provided with a continuously variable transmission 4 of a V belt type which is electrically controlled as a mechanism of transmitting a drive force from an engine 2 to a rear wheel 3. Further, the engine 2 constituted by an internal combustion engine is an example of "drive force generating means" in the meaning of the present specification, and the rear wheel 3 is an example of a "drive wheel" in the meaning of the present specification. Further, as shown by Fig. 2, the continuously variable transmission 4 includes a primary shaft 5 rotated by the engine 2, a primary sheave 6 connected to the primary shaft 5, a secondary shaft 9 for outputting power to the rear wheel 3 via a centrifugal clutch 7 and a speed reducing mechanism 8, a secondary sheave 10 connected to the secondary shaft 9, and a V belt 11 comprising an elastomer of rubber, resin or the like hung between the primary sheave 6 and the secondary sheave 10. Further, the primary sheave 6 is an example of "first drive force transmitting means" in the meaning of the present specification and the secondary sheave 10 is an example of "second drive force transmitting means" in the meaning of the present specification. Further, the V belt 11 is an example of a "belt member" in the meaning of the present specification.

Further, as shown by Fig. 2 and Fig. 3, the primary sheave 6 includes a fixed sheave 6a and a movable sheave 6b and the secondary sheave 10 includes a fixed sheave 10a and a movable sheave 10b. Further, V grooves 6c and 10c wound with the V belt 11 are formed respectively between the fixed sheave 6a and the movable sheave 6b of the primary sheave 6 and between the fixed sheave 10a and the movable sheave 10b of the secondary sheave 10. Further, the movable sheave 6b is formed movably in an axial direction of the primary shaft 5 and the movable sheave 10b is formed movably in an axial direction of the secondary shaft 9. Further, the movable sheave 10b of the secondary sheave 10 is urged to a side of the fixed sheave 10a by a compression coil spring 10d.

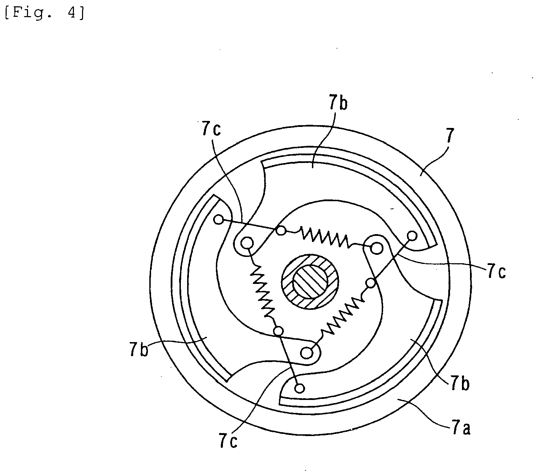

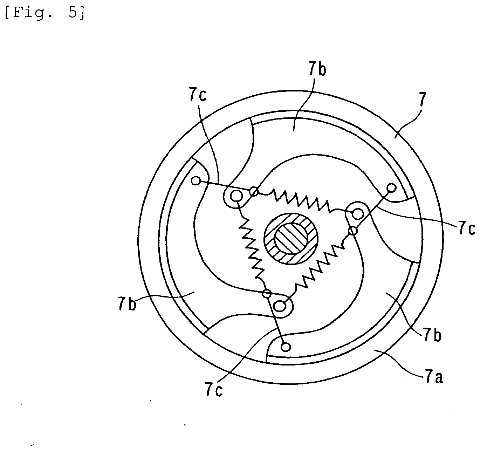

Further, as shown by Fig. 2, the drive force of the engine 2 is converted into a force of rotating the V belt 11 by the primary sheave 6, and the force of rotating the V belt 11 is transmitted to the centrifugal clutch 7 via the secondary sheave 10. As shown by Fig. 4, the centrifugal clutch 7 includes a clutch drum 7a, three clutch pieces 7b, and three clutch springs 7c for respectively connecting the three clutch pieces 7b. The clutch drum 7a is connected to the rear wheel 3 via a speed reducing mechanism 8 (refer to Fig. 2). Further, the three clutch pieces 7b (refer to Fig. 4) are connected to the secondary sheave 10 (refer to Fig. 2). Further, as shown by Fig. 4, the clutch pieces 7b becomes proximate to an inner peripheral face of the clutch drum 7a by a centrifugal force against an urge force of the clutch spring 7c as a rotational speed of the secondary sheave 10 (refer to Fig. 2) is increased. Further, when the rotational speed of the secondary sheave 10 becomes equal to or larger than a predetermined value, as shown by Fig. 5, the clutch pieces 7b are brought into contact with the inner peripheral face of the clutch drum 7a and the drive force is transmitted from the secondary sheave 10 (refer to Fig. 2) to the rear wheel 3.

Further, as shown by Fig. 2, the continuously variable transmission 4 is provided with a sheave position moving apparatus 12 for electrically moving a position of the movable sheave 6b of the primary sheave 6 and a sheave position detecting apparatus 13 for detecting the position of the movable sheave 6b. By the sheave position moving apparatus 12, the continuously variable transmission 4 is constituted to adjust a width of the V groove 6c of the primary sheave 6 by moving the movable sheave 6b of the primary sheave 6 in an axial direction of the primary shaft 5. That is, according to the continuously variable transmission 4, only the primary sheave 6 is constituted to be controlled electrically. Thereby, diameters of winding the V belt 11 around the primary sheave 6 and the secondary sheave 10 are changed and therefore, the gear ratio is changed steplessly between the primary sheave 6 and the secondary sheave 10.

Further, the continuously variable transmission 4 is provided with a secondary sheave rotational speed sensor 14 for detecting rotation of the secondary sheave 10. Further, a vicinity of the rear wheel 3 is provided with a rear wheel rotational speed sensor 15 for detecting a rotational speed of the rear wheel 3. By comparing a rotational speed of the secondary sheave 10 detected by the secondary sheave rotational speed sensor 14 and the rotational speed of the rear wheel 3 detected by the rear wheel rotational speed sensor 15, it can be confirmed whether the secondary shaft 9 and the centrifugal clutch 7 are connected. Further, a vicinity of the engine 2 is provided with an engine rotational speed sensor 16 for detecting a rotational speed of the engine 2.

Further, as shown by Fig. 2, the motor cycle 1 is provided with a speed change control apparatus 17 for controlling the gear ratio of the continuously variable transmission 4. Further, the speed change control apparatus 17 is an example of a "speed change controlling means" in the meaning of the present specification. The speed change control apparatus 17 is constituted by a microcomputer including CPU, a memory and the like. Further, the speed change control apparatus 17 is inputted with a secondary sheave rotational speed signal outputted from the secondary sheave rotational speed sensor 14, a rear wheel rotational speed signal outputted from the rear wheel rotational speed sensor 15, a throttle opening degree signal outputted from a throttle opening degree sensor (not illustrated), a sheave position signal outputted from the sheave position detecting apparatus 13, an engine rotational speed signal outputted from the engine rotational speed sensor 16, and a main switch signal of a main switch 18 for making a power source system of a total of the vehicle ON/OFF. Further, the main switch 18 is an example of a "first switch" in the meaning of the present specification. Further, the change speed control apparatus 17 controls the continuously variable transmission 4 based on the above-described respective signals. Further, the speed change control apparatus 17 is provided with a self holding circuit 17a. The self holding circuit 17a is provided for maintaining to supply power to the speed change control apparatus 17 even when a driver cuts the main switch 18 in running.

Further, as shown by Fig. 2, the speed change control apparatus 17 is supplied with power from a vehicle-mounted power source 19 via a power supply line 20. The power supply line 20 can supply power from the vehicle-mounted power source 19 to the speed change control apparatus 17 independently from the main switch 18. Further, the vehicle-mounted power source 19 is an example of "power supplying means" in the meaning of the present specification.

Here, according to the first embodiment, the power supply line 20 is provided with a relay circuit 21 having a self holding function. The relay circuit 21 is provided with a relay switch 22 for controlling to supply power from the vehicle-mounted power source 19 to the speed change control apparatus 17, and a switch control element 23 for controlling ON/OFF of the relay switch 22. Further, the relay switch 22 is an example of "second switch" in the meaning of the present specification. Further, there is provided a switch line 24 capable of applying a voltage from the vehicle-mounted power source 19 to the control switch element 23 via the main switch 18 between the vehicle-mounted power source 19 and the switch control element 23.

Further, the first embodiment is provided with a switch line 25 for maintaining the relay switch 22 in a closed state (ON state) by applying the voltage to the switch control element 23 even when the main switch 18 is made OFF between the switch control element 23 and the self holding circuit 17a. Further, the self holding circuit 17a of the speed change control apparatus 17 is constituted to apply the voltage to the switch control element 23 via the switch line 25 when power is supplied from the vehicle-mounted power source 19 to the power supply line 20. That is, according to the first embodiment, the voltage can be applied to the switch control element 23 from two routes of lines of the switch line 24 by way of the main switch 18 and the switch line 25 by way of the self holding circuit 17a. Further, the switch line 25 is provided with a diode 26 for preventing a current from flowing back to the self holding circuit 17a and preventing an inverse current from flowing to the self holding circuit 17a via the switch line 25 when the main switch 18 is made ON/OFF. Further, there is provided a diode 27 for preventing a current from flowing from the switch line 25 to a side of the main switch 18 (main switch signal line) when the main switch 18 is made OFF at a portion of the switch line 24 between the main switch 18 and the switch control element 23.

Further, the switch control element 23 is constituted to maintain the relay switch 22 in the closed state (ON state) when the voltage is applied from either one of the switch line 24 and the switch line 25. Further, the switch control element 23 is constituted to bring the relay switch 22 into an open state (OFF state) when the voltage is not applied from either of the switch line 24 and the switch line 25.

Further, a switch line 28 is provided between a portion of the switch line 24 between the main switch 18 and the relay circuit 21 and the engine 2. The switch line 28 is provided with an ignition control circuit 31 for controlling to ignite an ignition plug, and a switch 29 for stopping the engine 2 by stopping to supply power to the ignition control apparatus 31 at emergency. Thereby, even when the main switch 18 is brought into the ON state, by cutting the switch 29, the engine 2 can be stopped. Further, a portion of the switch line 24 between the main switch 18 and the relay circuit 21 is connected with a lamp system control circuit 32 for lighting a headlamp or the like, and a meter/displayer control circuit 33 for controlling instruments. Thereby, power is constituted to supply from the vehicle-mounted power source 19 to the lamp system control circuit 32 and the meter/displayer control circuit 33 via the switch line 24 only when the main switch 18 is brought into the ON state.

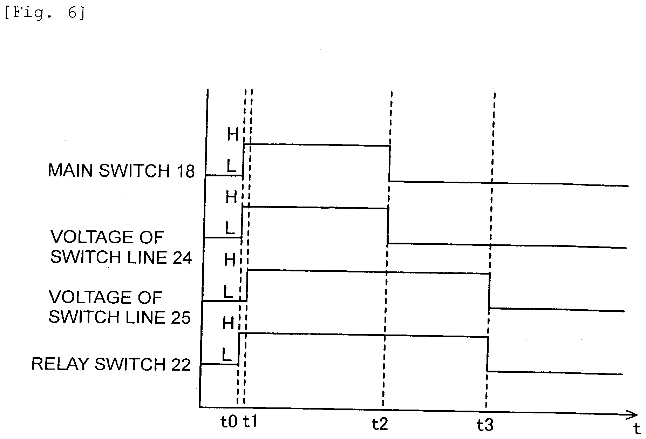

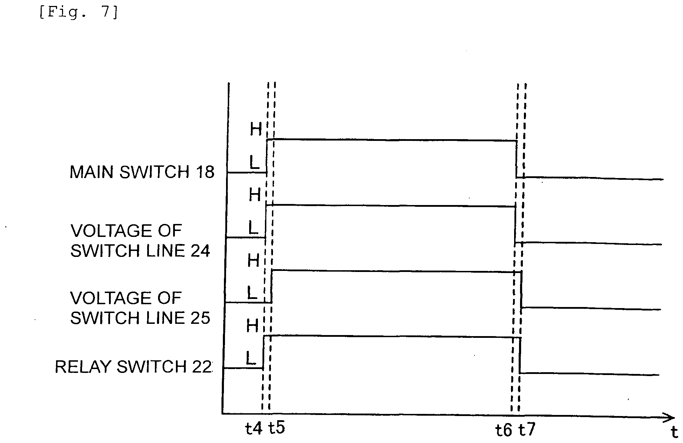

Fig. 6 is a timing chart showing a state of the relay switch and voltages of the switch lines when the main switch is made OFF in a state in which the vehicle speed of the motor cycle according to the first embodiment shown in Fig. 1 is larger than 0 km/h (running state), and Fig. 7 is a timing chart showing the state of the relay switch and the voltages of the switch lines when the main switch is made OFF in a state in which the vehicle speed of the motor cycle according to the first embodiment shown in Fig. 1 is 0 km/h (stationary state). Further, in the timing charts of Fig. 6 and Fig. 7, with regard to the main switch 18 and the relay switch 22, a state of an H level indicates an ON state and a state of an L level indicates an OFF state. Further, with regard to the voltage of the switch line 24 and the voltage of the switch line 25, a state of an H level indicates a state in which a voltage is applied to the switch control element 23 and a state of an L level indicates a state in which the switch control element 23 is not applied with a voltage.

First, an explanation will be given of a case in which the main switch 18 is made OFF in the state (running state) in which the vehicle speed is larger than 0 km/h in reference to Fig. 2 and Fig. 6. As shown by Fig. 6, when the main switch 18 is made ON at time t0 in starting the engine, the main switch signal (refer to Fig. 2) is supplied to the speed change control apparatus 17, and a voltage is applied from the vehicle-mounted power source 19 to the switch control element 23 via the switch line 24. Thereby, the relay switch 22 is brought into the ON state and therefore, power is supplied to the speed change control apparatus 17. Further, when power is supplied to the speed change control apparatus 17, a voltage is applied from the self holding circuit 17a to the switch control element 23 via the switch line 25 at substantially the same time t1. Thereafter, when the main switch 18 is switched to OFF at time t2 in running the motor cycle 1, the voltage is stopped to apply to the switch control element 23 via the switch line 24, and the main switch signal is stopped to supply to the speed change control apparatus 17. At the time point of making the main switch 18 OFF, the voltage is continued to apply from the self holding circuit 17a to the switch control element 23 via the switch line 25 and therefore, the switch control element 23 maintains the relay switch 22 in the closed state (ON state). Further, the vehicle speed is calculated based on the rear wheel rotational speed signal or the secondary sheave rotational speed signal. In this case, even when the main switch 18 is cut, since the vehicle is running, the vehicle speed is larger than 0 km/h. Further, in this case, according to the first embodiment, the voltage is continued to apply from the self holding circuit 17a to the switch control element 23. Thereafter, at a time point (time t3) at which the vehicle speed becomes 0 km/h, the voltage is stopped to apply from the self holding circuit 17a to the switch control element 23. Thereby, the relay switch 22 is brought into the open state (OFF state) and therefore, power is stopped to supply from the vehicle-mounted power source 19 to the speed change control apparatus 17 via the power supply line 20 and control of the continuously variable transmission 4 of the speed change control apparatus 17 is stopped.

Next, an explanation will be given of a case in which the main switch 18 is made OFF in a state in which the vehicle speed is 0 km/h (stationary state) in reference to Fig. 2 and Fig. 7. As shown by Fig. 7, when the main switch 18 is made ON at time t4 in starting the engine, the main switch signal (refer to Fig. 2) is supplied to the speed change control apparatus 17 and the voltage is applied from the vehicle-mounted power source 19 to the switch control element 23 via the switch line 24. Thereby, the relay switch 22 is brought into the ON state and therefore, power is supplied to the speed change control apparatus 17. Further, when power is supplied to the speed change control apparatus 17, the voltage is applied from the self holding circuit 17a to the switch control element 23 via the switch line 25 at substantially the same time t5. Thereafter, when the main switch 18 is switched to OFF at time t6 in the stationary state after finishing to run the motor cycle 1, the voltage is stopped to apply to the switch control element 23 via the switch line 24, and the main switch signal is stopped to supply to the speed change control apparatus 17. At a time point at which the main switch 18 is made OFF (time t6), the voltage is continued to apply from the self holding circuit 17a to the switch control element 23 via the switch line 25 and therefore, the switch control element 23 maintains the relay switch 22 in the closed state (ON state). Further, the vehicle speed is calculated based on the rear wheel rotational speed signal or the secondary sheave rotational speed signal. In this case, since the vehicle speed is 0 km/h, at time t7 substantially the same as time t6, the voltage is stopped to apply from the self holding circuit 17a to the switch control element 23. Thereby, the relay switch 22 is brought into the open state (OFF state) and therefore, power is stopped to supply from the vehicle-mounted power source 19 to the vehicle speed control apparatus 17 via the power supply line 20 and control of the continuously variable transmission 4 of the speed change control apparatus 17 is stopped.

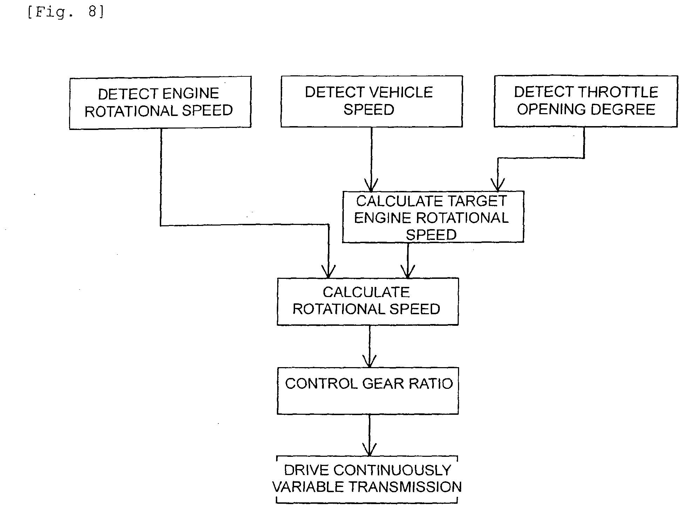

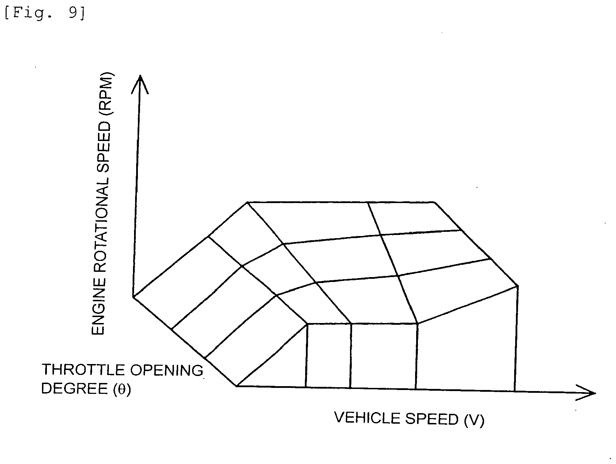

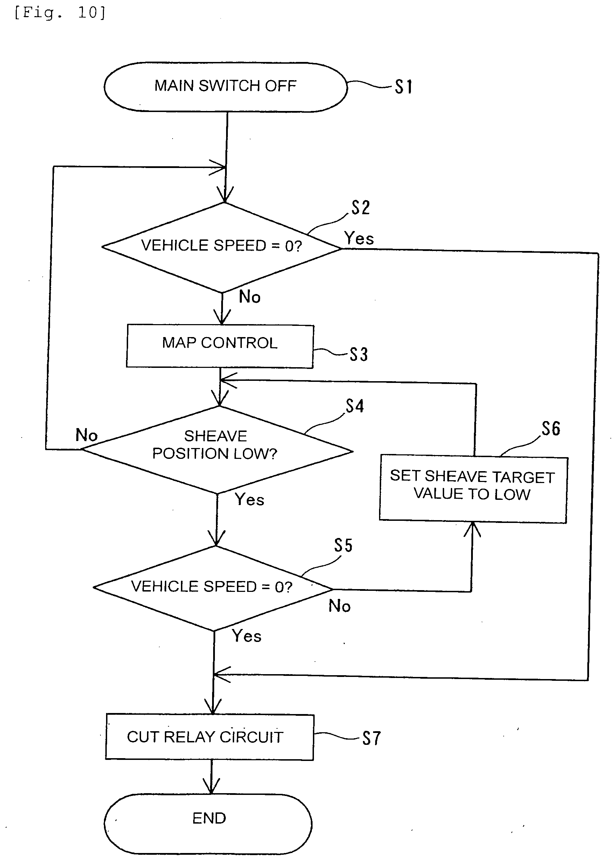

Fig. 8 is a diagram for explaining a method of controlling the continuously variable transmission of the speed change control apparatus of the motor cycle according to the first embodiment shown in Fig. 1, and Fig. 9 is a diagram indicating a three-dimensional control map of the speed change control apparatus of the motor cycle according to the first embodiment shown in Fig. 1. Fig. 10 is a diagram showing a processing flow of the speed change control apparatus when the main switch according to the first embodiment shown in Fig. 1 is made OFF. Next, a detailed explanation will be given of operation of the speed change control apparatus 17 according to the first embodiment in reference to Fig. 2 and Fig. 8 through Fig. 10.

Further, in the following explanation, at time point at which the main switch 18 is made OFF, supply of power to the ignition control circuit 31 is stopped to stop the engine 2. Further, during a predetermined time period immediately after stopping to combust the engine 2, a crankshaft of the engine 2 and the primary shaft 5 are rotated by inertia and therefore, the primary sheave 6 and the secondary sheave 10 are rotated. Thereby, until the vehicle speed becomes equal to or smaller than a predetermined value, the gear ratio can be changed in a state of bringing the V belt 11 into close contact with the primary sheave 6 and the secondary sheave 10.

At step S1 shown in Fig. 10, when the main switch 18 is made OFF, the main switch signal (refer to Fig. 2) is not supplied to the speed change control apparatus 17. Further, at step S2, it is determined whether the vehicle speed is 0 km/h. At step S2, when it is determined that the vehicle speed is 0 km/h (stationary state), at step S7, by bringing the relay switch 22 from the closed state (ON state) to the open state (OFF state) by stopping to apply a voltage from the self holding circuit 17a to the switch control element 23 via the switch line 25, the relay circuit 21 is cut and the processing is finished. Thereby, power supply from the vehicle-mounted power source 19 to the speed change control apparatus 17 is cut and the speed change control of the speed change control apparatus 17 is stopped. Further, at step S2, when it is determined that the vehicle speed is not 0 km/h (running state), at step S3, a map control is carried out. Since the vehicle speed is going to be reduced, the gear ratio is changed to be low. Specifically, the vehicle speed is calculated based on the rear rotational speed signal outputted by the rear wheel rotational speed rotational sensor 15. A target engine rotational speed is calculated from the calculated vehicle speed and the throttle opening degree signal based on the three-dimensional control map shown in Fig. 9. Here, the three-dimensional control map is previously formed from the engine rotational speed, the vehicle speed and the throttle opening degree. As shown by Fig. 9, the three-dimensional control map designates the vehicle speed (V) at an abscissa, the throttle opening degree (θ) at an axis directed in the depth direction, and the engine rotational speed (rpm) at the ordinate, and the target engine rotational speed can be calculated from the vehicle speed and the throttle opening degree by the three-dimensional control map. Further, as shown by Fig. 8, the gear ratio is calculated from the target engine rotational speed and an actual engine rotational speed provided from the engine rotational speed sensor 16 (refer to Fig. 2). Further, the gear ratio is controlled based on the calculated gear ratio and the continuously variable transmission 4 is driven. Specifically, a moving amount of the sheave position moving apparatus 12 is determined based on the calculated gear ratio. Further, a target position of the movable sheave 6b of the primary sheave 6 is determined based on the determined moving amount, the movable sheave 6b of the primary sheave 6 is moved by using the sheave position moving apparatus 12 and the gear ratio is made to be proximate to low.

Thereafter, at step S4, it is determined whether the sheave position becomes low. When it is determined that the sheave position is not low at step S4, the operation returns to step S2 and continues to control the gear ratio by the three-dimensional control map until the vehicle speed becomes 0 km/h. On the other hand, when it is determined that the sheave position becomes low at step S4, the operation proceeds to step S5. At step S5, it is determined whether the vehicle speed becomes 0 km/h, and when it is determined that the vehicle speed does not become 0 km/h, at step S6, a sheave target value is set to be low and the speed change control is continued. Further, determinations at step S4 and step S5 are repeated. In this case, the speed change control apparatus 17 maintains the gear ratio to be low until the vehicle speed becomes 0 km/h. Thereafter, when the vehicle speed becomes 0 km/h, at step S5, it is determined that the vehicle speed is 0 km/h, and at step S7, the relay circuit 21 is cut and the processing is finished.

According to the first embodiment, as described above, there is provided the speed change control apparatus 17 for continuously controlling the gear ratio of the continuously variable transmission 4 after the engine 2 is instructed to stop by making the main switch 18 OFF. Thereby, even after the engine 2 is instructed to stop by making the main switch 18 OFF by a driver in running, the gear ratio of the continuously variable transmission 4 can continuously be controlled by the self holding circuit 17a of the speed change control apparatus 17 and therefore, the gear ratio of the continuously variable transmission 4 can be made to be proximate to low in running (before stopping). Thereby, in starting operation at a succeeding time, the engine 2 can be started in a state of being low or being proximate to low and therefore, a load on the engine 2 is reduced and the engine can be started smoothly. Further, even after the engine 2 is instructed to stop by making the main switch 18 OFF in running, the continuously variable transmission 4 can be made to be proximate to low in running (before stopping) and therefore, in starting operation at a succeeding time after stopping, it is not necessary to return the gear ratio of the continuously variable transmission 4 to low. Thereby, a time period until starting the vehicle after the starting operation can be shortened. Further, by continuing to control the gear ratio of the continuously variable transmission 4 after instructing to stop the engine 2, even after the engine 2 is instructed to stop by making the main switch 18 OFF in running, the vehicle can be run by inertia while executing the speed change control to the low side by the speed change control apparatus 17. Thereby, even after the engine 2 is instructed to stop, the vehicle can be run in a state of being easy to work the engine brake and therefore, operability can be promoted.

Further, according to the first embodiment, after the engine 2 is instructed to stop by making the main switch 18 OFF, when the vehicle speed is larger than 0 km/h, based on the three-dimensional control map for the speed change control, the continuously variable transmission 4 is controlled by the map such that the gear ratio of the continuously variable transmission 4 becomes low. Thereby, even after instructing to stop the engine 2 by making the main switch 18 OFF in running, easily, the gear ratio of the continuously variable transmission 4 can be made to be proximate to low by using the three-dimensional control map.

Further, according to the first embodiment, after instructing to stop the engine 2 by making the main switch 18 OFF, when the gear ratio becomes low, until the vehicle speed becomes 0 km/h, the gear ratio of low is maintained. After making the main switch 18 OFF, when the gear ratio is continued to control, in the case in which a road becomes a downhill, owing to an increase in the vehicle speed, there is a case in which the gear ratio is varied from low to top side. According to the first embodiment, the gear ratio is set to low and therefore, the engine brake can further excellently be worked in comparison with a case of varying the gear ratio to the top side. Thereby, the vehicle speed can further be restrained from being increased and therefore, the operability of the driver can further be promoted.

Further, according to the first embodiment, by constituting the speed change control apparatus 17 such that the relay switch 22 is brought into the OFF state when the vehicle speed becomes 0 km/h, the gear ratio of the continuously variable transmission 4 can be made to be proximate to low until stopping the motor cycle 1 and therefore, the gear ratio of the continuously variable transmission 4 can further be made to be proximate to low. Further, by constituting the speed change control apparatus 17 such that the relay switch 22 is brought into the OFF state when the vehicle speed becomes 0 km/h, supply of power from the vehicle-mounted power source 19 to the speed change control apparatus 10 is cut and therefore, when the vehicle speed becomes 0 km/h, easily, the control of the gear ratio by the speed change control apparatus 17 can be stopped.

### (Second Embodiment)

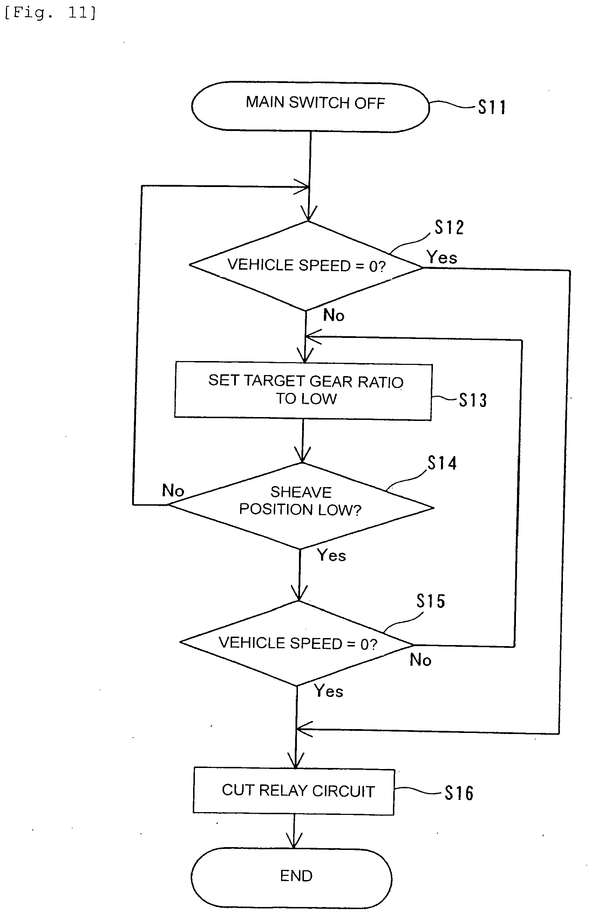

Fig. 11 is a diagram showing a processing flow of a speed change control apparatus when the main switch is made OFF according to a second embodiment. According to the second embodiment, different from the above-described first embodiment, an explanation will be given of an example of setting the target gear ratio to low without executing the map control when the main switch 18 is made OFF. Further, other constitution of the second embodiment is similar to that of the first embodiment. An explanation will be given of operation of the speed change control apparatus 17 according to the second embodiment in reference to Fig. 2 and Fig. 11.

At step S11 shown in Fig. 11, when the main switch 18 is made OFF, the main switch signal (refer to Fig. 2) is not supplied to the speed change control apparatus 17. Further, at step S12, it is determined whether the vehicle speed is 0 km/h. At step S12, when it is determined that the vehicle speed is 0 km/h (stationary state), at step S16, by bringing the relay switch 22 from the closed state (ON state) to the open state (OFF state) by stopping to apply a voltage from the self holding circuit 17a to the switch control element 23 via the switch line 25, the relay circuit 21 is cut and the processing is finished. Thereby, supply of power from the vehicle-mounted power source 19 to the speed change control apparatus 17 is cut and the speed change control of the speed change control apparatus 17 is stopped. Further, at step S12, when it is determined that the vehicle speed is not 0 km/h (running state), at step S13, the target gear ratio (sheave target value) is fixedly set to low. Thereby, the movable sheave 6b of the primary sheave 6 is immediately moved to the position of low by using the sheave position moving apparatus 12.

Thereafter, at step S14, it is determined whether the sheave position becomes low. When it is determined that the sheave position does not become low at step S14, the operation returns to step S12, and when it is determined that the sheave position becomes low at step S14, the operation proceeds to step S15. At step S15, it is determined whether the vehicle speed becomes 0 km/h, and when it is determined that the vehicle speed does not become 0 km/h, the operation returns to step S13, and determinations at step S14 and step S15 are repeated. In this case, the speed change control apparatus 17 maintains the gear ratio to be low until the vehicle speed becomes 0 km/h. Thereafter, when the vehicle speed becomes 0 km/h, at step S15, it is determined that the vehicle speed becomes 0 km/h, at step S16, the relay circuit 21 is cut and the processing is finished.

According to the second embodiment, as described above, after instructing to stop the engine 2 by making the main switch 18 OFF, when the vehicle speed is larger than 0 km/h, by setting the target gear ratio (sheave target value) of the continuously variable transmission 4 to low, in comparison with the case of using the map control, the gear ratio of the continuously variable transmission 4 can fast be proximate to low.

Further, other effect of the second embodiment is similar to that of the first embodiment. That is, also in the second embodiment, similar to the first embodiment, there is provided the speed change control apparatus 17 for continuously controlling the gear ratio of the continuously variable transmission 4 after instructing to stop the engine 2 by making the main switch 18 OFF. Thereby, when a driver makes the main switch 18 OFF in running, the gear ratio can pertinently be set.

### (Third Embodiment)

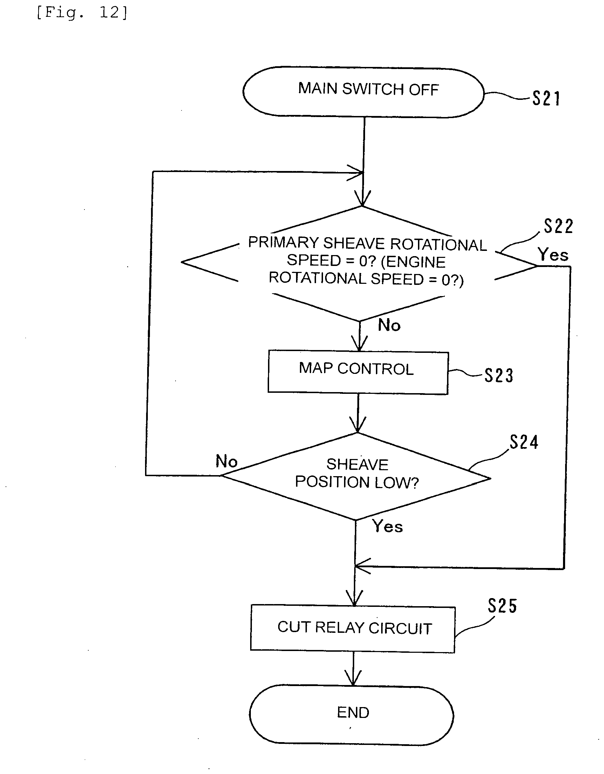

Fig. 12 is a diagram showing a processing flow of a speed change control apparatus when the main switch is made OFF according to a third embodiment. According to the third embodiment, different from the case of controlling the gear ratio based on the vehicle speed explained in the above-described first and second embodiments, an explanation will be given of a case of controlling the gear ratio based on the rotational speed of the primary sheave 6 detected from the engine rotational speed. Further, other constitution of the third embodiment is similar to that of the first embodiment.

An explanation will be given of operation of the speed change control apparatus 17 according to the third embodiment in reference to Fig. 2 and Fig. 12 as follows.

At step S21 shown in Fig. 12, when the main switch 18 (refer to Fig. 2) is made OFF, the main switch signal is not supplied to the speed change control apparatus 17. Further, at step S22, it is determined whether the rotational speed of the primary sheave 6 is 0 rpm. Further, according to the third embodiment, the rotational speed of the primary sheave 6 is detected based on the engine rotational speed signal from the engine rotational speed sensor 16. That is, according to the third embodiment, the rotational speed of the primary sheave 6 is detected indirectly by detecting the engine rotational speed. At step S22, when it is determined that the rotational speed of the primary sheave 6 is 0 rpm, at step S25, by bringing the relay switch 22 from the closed state (ON state) to the open state (OFF state) by stopping to apply a voltage from the self holding circuit 17a to the switch control element 23 via the switch line 25, the relay circuit 21 is cut and the processing is finished. Thereby, supply of power from the vehicle-mounted power source 19 to the speed change control apparatus 17 is cut and the speed change control of the speed change control apparatus 17 is stopped. Further, at step S22, when it is determined that the rotational speed of the primary sheave 6 is not 0 rpm, at step S23, by a map control similar to that of the above-described first embodiment, the gear ratio is changed to low.

Thereafter, at step S24, it is determined whether the sheave position becomes low. When it is determined that the sheave position does not become low at step S24, the operation returns to step S22, and when it is determined that the sheave position becomes low at step S24, the operation proceeds to step S25. At step S25, the relay circuit 21 is cut and the processing is finished.

According to the third embodiment, as described above, by constructing the constitution such that the gear ratio of the continuously variable transmission 4 is not controlled when rotation of the primary sheave 6 indirectly detected by the engine rotational speed is stopped, after stopping to rotate the primary sheave 6, the gear ratio of the continuously variable transmission 4 is not controlled and therefore, the gear ratio of the continuously variable transmission 4 can be restrained from being controlled after stopping to rotate the primary sheave 6. Thereby, it can be restrained that there is brought about a drawback that the V belt 11 is loosened by moving only the sheave of the primary sheave 6 to the low side in a state of stopping the secondary sheave 10 owing to the fact that the gear ratio of the continuously variable transmission 4 is controlled after stopping to rotate the primary sheave 6 and the secondary sheave 10. As a result, it can be restrained that there is brought about a drawback of damaging the V belt 11 when the engine is restarted in a state of loosening the V belt 11.

Further, according to the third embodiment, the centrifugal clutch 7 is provided between the secondary sheave 10 and the rear wheel 3. In the case of providing the centrifugal clutch 7 in this way, when the rotational speed of the centrifugal clutch 7 becomes equal to or smaller than a predetermined rotational speed, the centrifugal clutch 7 is not provided with a function of transmitting the drive force and therefore, whereas rotation of the primary sheave 6 and the secondary sheave 10 is stopped, the motor cycle 1 continues to be run. In this case, when the gear ratio is continued to be controlled until the vehicle speed becomes equal to a predetermined value or smaller after stopping to rotate the primary sheave 6 and the secondary sheave 10, even after stopping the primary sheave 6 and the secondary sheave 10, the gear ratio of the continuously variable transmission 4 is controlled and therefore, the V belt 11 is loosened by moving only the primary sheave 6 to the low side in the state of stopping the secondary sheave 10 as described above. Therefore, particularly, when the centrifugal clutch 7 is provided, by using the constitution of controlling the gear ratio of the continuously variable transmission 4 by indirectly detecting rotation of the primary sheave 6 from the engine rotational speed as in the third embodiment, it is effective to restrain the V belt 11 from being loosened by preventing the gear ratio of the continuously variable transmission 4 from being controlled when the rotational speed of the primary sheave 6 becomes 0 rpm.

Further, in the case of arranging the centrifugal clutch 7 between the secondary sheave 10 and the rear wheel 3 as in the third embodiment, when the rotational speed of the centrifugal clutch 7 becomes equal to or smaller than the predetermined rotational speed, the centrifugal clutch 7 is not provided with the function of transmitting the drive force of the secondary sheave 10 to the rear wheel 3 and therefore, when the rotational speed of the centrifugal clutch 7 becomes equal to or smaller than the predetermined rotational speed, the rotational speed of the secondary sheave 10 (continuously variable transmission 4) cannot be detected by detecting rotation of the rear wheel 3. In this case, it is effective to detect the rotational speed of the continuously variable transmission 4 by indirectly detecting rotation of the primary sheave 6 by detecting rotation of the engine 2 as described above.

Further, according to the third embodiment, similar to the above-described first and second embodiments, the V belt 11 of the belt type continuously variable transmission 4 is formed by an elastomer of rubber, resin or the like. The V belt 11 comprising elastomer is liable to be damaged when the V belt 11 is loosened. Therefore, the gear ratio of the continuously variable transmission 4 is prevented from being controlled when the rotational speed of the primary sheave 6 becomes 0 rpm by using the constitution of controlling the gear ratio of the continuously variable transmission 4 by indirectly detecting the rotational speed of the primary sheave 6 by the engine rotational speed as in the above-described third embodiment. Thereby, a tension of the V belt 11 can pertinently be maintained and therefore, the V belt 11 can be restrained from being damaged owing to loosening of the V belt 11.

Further, other effect of the third embodiment is similar to that of the first embodiment. That is, also according to the third embodiment, similar to the first embodiment, there is provided the speed change control apparatus 17 for continuously controlling the gear ratio of the continuously variable transmission 4 after instructing to stop the engine 2 by making the main switch 18 OFF. Thereby, when the driver makes the main switch 18 OFF in running, the gear ratio can pertinently be set.

### (Fourth Embodiment)

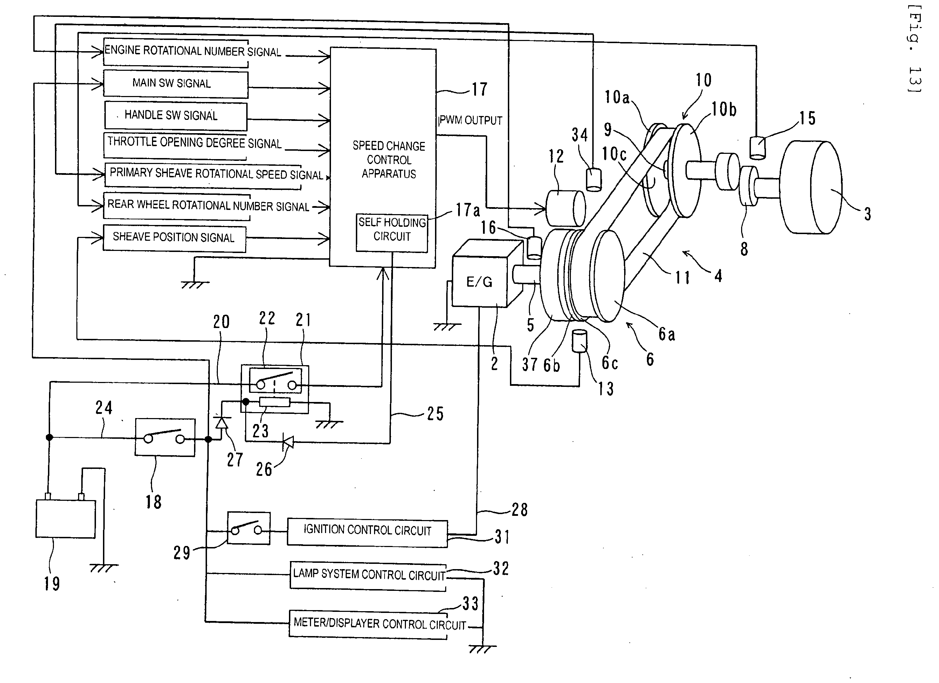

Fig. 13 is a view for explaining a speed change control of a continuously variable transmission of a motor cycle according to a fourth embodiment. According to the fourth embodiment, different from the first embodiment, a centrifugal clutch 37 is arranged between the engine 2 and the primary sheave 6. Further, according to the fourth embodiment, the speed change control apparatus 17 is constructed by a constitution of controlling the gear ratio based on the rotational speed of the primary sheave 6 detected from the primary sheave rotational speed signal. Further, other constitution of the fourth embodiment is similar to that of the first embodiment.

According to the fourth embodiment, as shown by Fig. 13, the centrifugal clutch 37 is arranged between the engine 2 and the primary sheave 6. Further, the centrifugal clutch 37 is constituted to transmit the drive force to the primary sheave 6 when the rotational speed of the engine 2 becomes equal to or larger than a predetermined value. Further, according to the fourth embodiment, a centrifugal clutch is not arranged between the secondary sheave 10 and the speed reducing mechanism 8. Therefore, the secondary sheave 10 is directly connected to the speed reducing mechanism 8. Further, the continuously variable transmission 4 is provided with a primary sheave rotational speed sensor 34 for detecting rotation of the primary sheave 6. Further, the speed change control apparatus 17 is inputted with a primary sheave rotational speed signal outputted from the primary sheave rotational speed sensor 34. By comparing the rotational speed of the primary sheave 6 detected by the primary sheave rotational speed sensor 34 and the rotational speed of the engine 2 detected by the engine rotational speed sensor 16, it can be confirmed whether the primary shaft 5 and the centrifugal clutch 37 are connected.

Further, according to the fourth embodiment, the secondary sheave rotational speed sensor for detecting rotation of the secondary sheave 10 is not provided.

Further, according to the fourth embodiment, the speed change control apparatus 17 is constituted to detect the rotational speed of the primary sheave 6 based on the primary sheave rotational speed signal from the primary sheave rotational speed sensor 34.

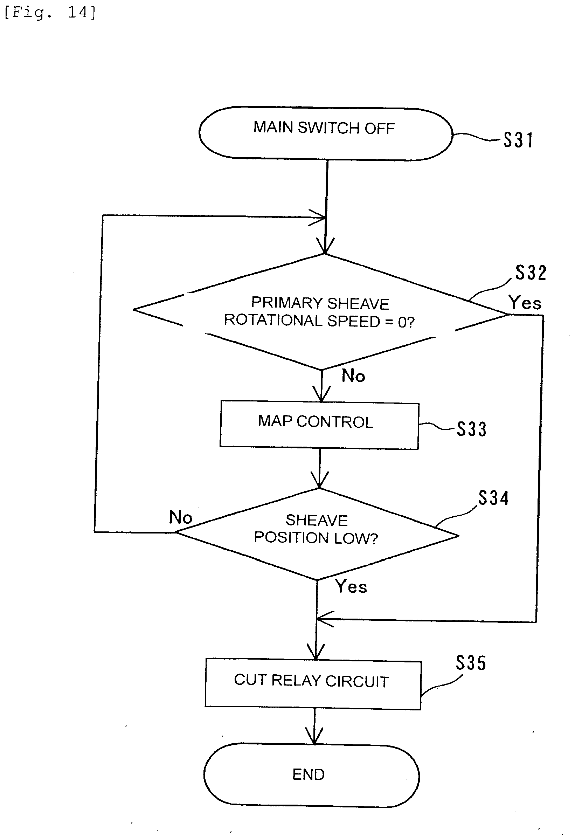

Fig. 14 is diagram showing a processing flow of the speed change control apparatus when the main switch is made OFF according to the fourth embodiment. Next, operation of the speed change control apparatus 17 according to the fourth embodiment will be explained in reference to Fig. 13 and Fig. 14.

At step S31 shown in Fig. 14, when the main switch 18 (refer to Fig. 13) is made OFF, the main switch signal is not supplied to the speed change control apparatus 17. Further, at step S32, it is determined whether the rotational speed of the primary sheave 6 is 0 rpm. Further, according to the fourth embodiment, the rotational speed of the primary sheave 6 is detected based on the primary sheave rotational speed signal from the primary sheave rotational speed sensor 34. At step S32, when it is determined that the rotational speed of the primary sheave 6 is 0 rpm, the operation proceeds to step S35. At step S35, the relay switch 22 is brought from the closed state (ON state) to the open state (OFF state) by stopping to apply a voltage from the self holding circuit 17a to the switch control element 23 via the switch line 25. Thereby, the relay circuit 21 is cut and the processing is finished. Thereby, supply of power from the vehicle-mounted power source 19 to the speed change control apparatus 17 is cut and the speed change control of the speed change control apparatus 17 is stopped. Further, at step S32, when it is determined that the rotational speed of the primary sheave 6 is not 0 rpm, at step S33, the gear ratio is changed to low by a map control similar to that of the above-described first embodiment.

Thereafter, at step S34, it is determined whether the sheave position becomes low. When it is determined that the sheave position does not become low at step S34, the operation returns to step S32 and when it is determined that the sheave position becomes low at step S34, the operation proceeds to step S35. At step S35, the relay circuit 21 is cut and the processing is finished.

According to the fourth embodiment, as described above, when rotation of the primary sheave 6 directly detected by the primary sheave rotational speed sensor 34 is stopped, the gear ratio of the continuously variable transmission 4 is not controlled. Thereby, after stopping to rotate the primary sheave 6, the gear ratio of the continuously variable transmission 4 is not changed and therefore, it can be restrained that the gear ratio of the continuously variable transmission 4 is changed after stopping to rotate the primary sheave 6. Thereby, it can be restrained that the gear ratio of the continuously variable transmission 4 is changed after stopping to rotate the primary sheave 6 and the secondary sheave 10 and therefore, the tension of the V belt 11 can pertinently be maintained. As a result, it can be restrained that there is brought about a drawback of damaging the V belt 11 when the engine is restarted in the state of loosening the V belt 11. Further, in the case of arranging the centrifugal clutch 37 between the engine 2 and the primary sheave 6 as in the fourth embodiment, when the rotational speed of the centrifugal clutch 37 becomes equal to or smaller than the predetermined rotational speed, the centrifugal clutch 37 is not provided with the function of transmitting the drive force of the engine 2 to the primary sheave 6 and therefore, when the rotational speed of the centrifugal clutch 37 becomes equal to or smaller than the predetermined rotational speed, the rotational speed of the primary sheave 6 cannot be detected by detecting rotation of the engine 2. In this case, it is effective to detect the rotational speed of the continuously variable transmission 4 by directly detecting rotation of the primary sheave 6 as described above.

Further, according to the fourth embodiment, similar to the above-described third embodiment, the V belt 11 of the belt type continuously variable transmission 4 is formed by an elastomer of rubber, resin or the like and therefore, the V belt is liable to be damaged in comparison with the belt member comprising a metal. In this case, as in the fourth embodiment by using the constitution of controlling the gear ratio of the continuously variable transmission 4 by directly detecting the rotational speed of the primary sheave 6 by the primary sheave rotational speed sensor 34, it is particularly effective to restrain the V belt 11 from being loosened by preventing the gear ratio of the continuously variable transmission 4 from being controlled when the rotational speed of the primary sheave 6 becomes 0 rpm.

Further, other effect of the fourth embodiment is similar to that of the above-described first embodiment. That is, also according to the fourth embodiment, similar to the first embodiment, there is provided the speed change control apparatus 17 for continuously controlling the gear ratio of the continuously variable transmission 4 after instructing to stop the engine 2 by making the main switch 18 OFF. Thereby, when the driver makes the main switch 18 OFF in running, the gear ratio can pertinently be set.

### (Fifth Embodiment)

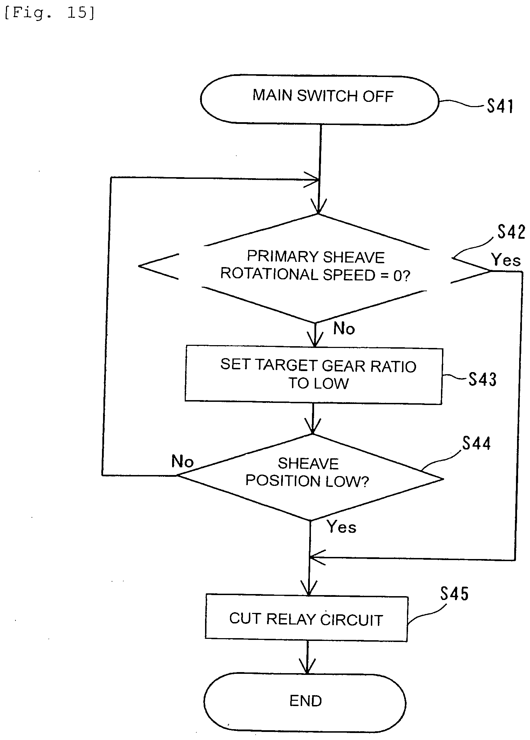

Fig. 15 is a diagram showing a processing flow of a speed change control apparatus when the main switch is made OFF according to a fifth embodiment. According to the fifth embodiment, an explanation will be given of an example of constituting such that when the main switch 18 is made OFF, the target gear ratio is set to low without executing a map control in the constitutions of the third and the fourth embodiments. Further, other constitution of the fifth embodiment is similar to those of the third and the fourth embodiments. An explanation will be given of operation of the speed change control apparatus 17 according to the fifth embodiment in reference to Fig. 2, Fig. 13 and Fig. 15.

At step S41 shown in Fig. 15, when the main switch 18 is made OFF, the main switch signal (refer to Fig. 2 and Fig. 13) is not supplied to the speed change control apparatus 17. Further, at step S42, it is determined whether the rotational speed of the primary sheave 6 is 0 rpm. At step S42, when it is determined that the rotational speed of the primary sheave 6 is 0 rpm (stationary state), at step S45, the relay circuit 21 is cut and the processing is finished by bringing the relay switch 22 from the closed state (ON state) to the open state (OFF state) by stopping to apply a voltage from the self holding circuit 17a to the switch control element 23 via the switch line 25. Thereby, supply of power from the vehicle-mounted power source 19 to the speed change control apparatus 17 is cut and the speed change control of the speed change control apparatus 17 is stopped. Further, at step S42, when it is determined that the rotational speed of the primary sheave 6 is not 0 rpm (running state), at step S43, the target gear ratio (sheave target value) is fixedly set to low. Thereby, the movable sheave 6b of the primary sheave 6 is immediately moved to the position of low by using the sheave position moving apparatus 12.

Thereafter, at step S44, it is determined whether the sheave position becomes low. When it is determined that the sheave position does not become low at step S44, the operation returns to step S42, and when it is determined that the sheave position becomes low at step S44, the operation proceeds to step S45. At step S45, the relay circuit 21 is cut and the processing is finished.

According to the fifth embodiment, as described above, after the engine 2 is instructed to stop by making the main switch 18 OFF, when the rotational speed of the primary sheave 6 is larger than 0 rpm, by setting the target gear ratio (sheave target value) of the continuously variable transmission 4 to low, in comparison with the case of using the map control, the gear ratio of the continuously variable transmission 4 can fast be proximate to low.

Further, other effect of the fifth embodiment is similar to those of the third embodiment and the fourth embodiment.

### (Sixth Embodiment)

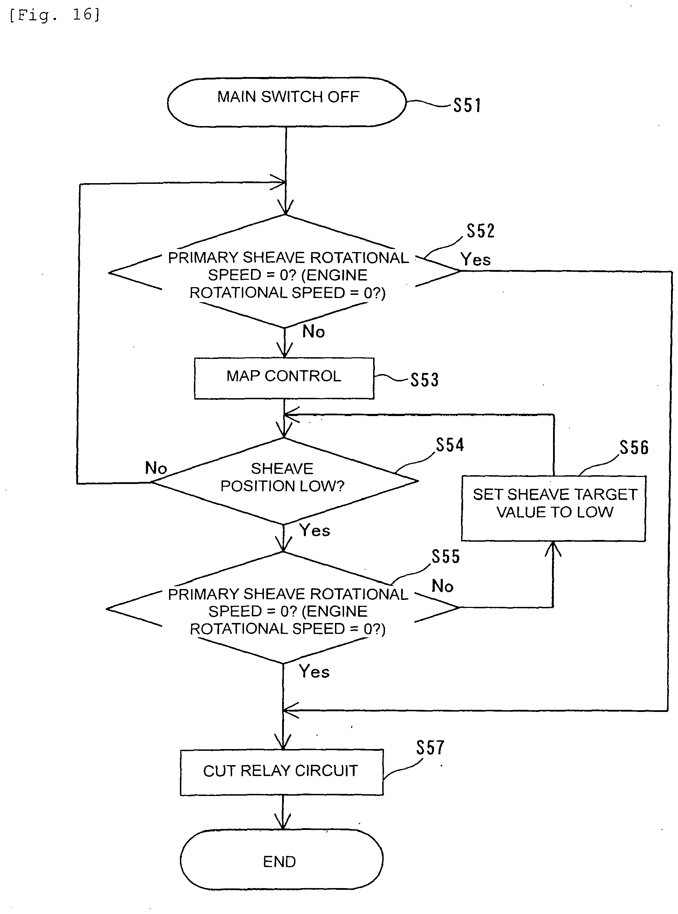

Fig. 16 is a diagram showing a processing flow of a speed change control apparatus when the main switch is made OFF according to a sixth embodiment. According to the sixth embodiment, different from the third embodiment, an explanation will be given of a case in which when the sheave position becomes low by the map control, the sheave target value is set to low until the rotational speed of the primary sheave 6 becomes 0 rpm. Further, other constitution of the sixth embodiment is similar to that of the third embodiment.

An explanation will be given of operation of the speed change control apparatus 17 according to the sixth embodiment in reference to Fig. 2 and Fig. 16 as follows.

At step S51 shown in Fig. 16, when the main switch 18 (refer to Fig. 2) is made OFF, the main switch signal is not supplied to the speed change control apparatus 17. Further, at step S52, it is determined whether the rotational speed of the primary sheave 6 is 0 rpm. At step S52, when it is determined that the rotational speed of the primary sheave 6 is 0 rpm, at step S57, the relay circuit 21 is cut and the processing is finished by bringing the relay switch 22 from the closed state (ON state) to the open state (OFF state) by stopping to apply a voltage from the self holding circuit 17a to the switch control element 23 via the switch line 25. Thereby, supply of power from the vehicle-mounted power source 19 to the speed change control apparatus 17 is cut and the speed change control of the speed change control apparatus 17 is stopped. Further, at step S52, when it is determined that the rotational speed of the primary sheave 6 is not 0 rpm, at step S53, the gear ratio is changed to low by a map control similar to that of the above-described first embodiment.

Thereafter, at step S54, it is determined whether the sheave position becomes low. When it is determined that the sheave position does not become low at step S54, the operation returns to step S52, and when it is determined that the sheave position becomes low at step S54, the operation proceeds to step S55. At step S55, it is determined whether the rotational speed of the primary sheave 6 becomes 0 rpm, and when it is determined that the rotational speed of the primary sheave 6 does not become 0 rpm, at step S56, the sheave target value is set to low and the speed change control is continued. Further, determinations at step S54 and step S55 are repeated. In this case, according to the speed change control apparatus 17, the gear ratio is held to low until the rotational speed of the primary sheave 6 becomes 0 rpm. Thereafter, when the rotational speed of the primary sheave 6 becomes 0 rpm, at step S55, it is determined that the rotational speed of the primary sheave 6 is 0 rpm, at step S57, the relay circuit 21 is cut and the processing is finished.

Here, when the gear ratio control is continued after making the main switch 18 OFF, in the case in which a road is a downhill, there is a case of varying the gear ratio from low to a top side owing to the fact that the vehicle speed is increased. According to the sixth embodiment, as described above, after the engine 2 is instructed to stop by making the main switch 18 OFF, when the gear ratio becomes low, the gear ratio of low is maintained until the rotational speed of the primary sheave 6 becomes 0 rpm. In this way, according to the sixth embodiment, the gear ratio is maintained to be low and therefore, the engine brake can further be worked in comparison with the case of varying the gear ratio to the top side. Thereby, the vehicle speed can further be restrained from being increased and therefore, the operability of the driver can be promoted.

Further, other effect of the sixth embodiment is similar to that of the above-described third embodiment.

### (Seventh Embodiment)

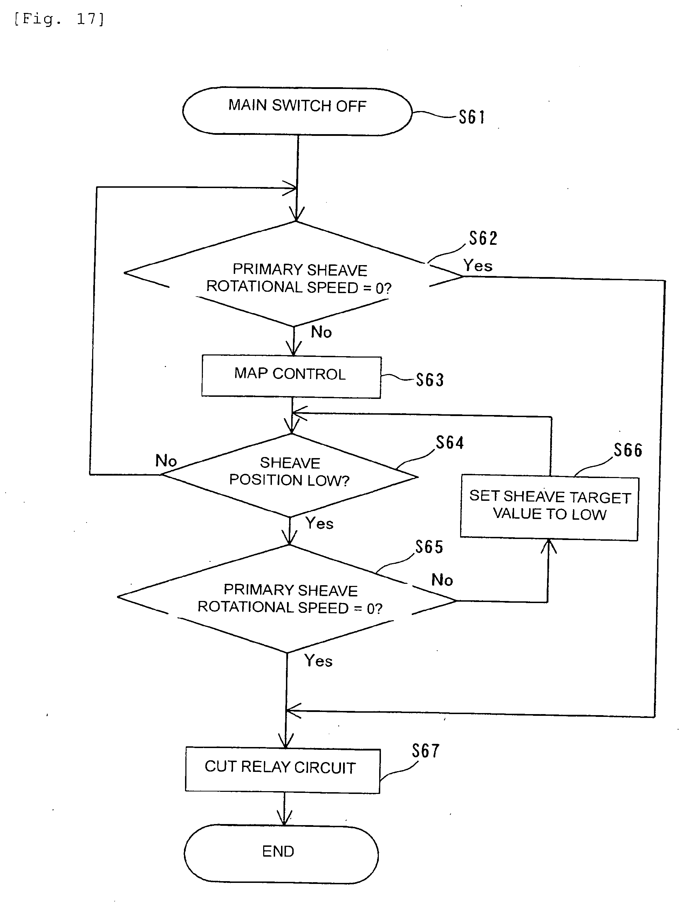

Fig. 17 is a diagram showing a processing flow of a speed change control apparatus when the main switch is made OFF according to a seventh embodiment. According to the seventh embodiment, different from the above-described fourth embodiment (refer to Fig. 14), an explanation will be given of a case in which when the sheave position becomes low by a map control, the sheave target value is set to low until the rotational speed of the primary sheave 6 becomes 0 rpm. Further, other constitution of the seventh embodiment is similar to that of the fourth embodiment.

An explanation will be given of operation of the speed change control apparatus 17 according to the seventh embodiment in reference to Fig. 13 and Fig. 17.

At step S61 shown in Fig. 17, when the main switch 18 (refer to Fig. 13) is made OFF, the main switch signal is not supplied to the speed change control apparatus 17. Further, at step S62, it is determined whether the rotational speed of the primary sheave 6 is 0 rpm. At step S62, when it is determined that the rotational speed of the primary sheave 6 is 0 rpm, at step S67, the relay circuit 21 is cut and the processing is finished by bringing the relay switch 22 from the closed state (ON state) to the open state (OFF state) by stopping to apply a voltage from the self holding circuit 17a to the switch control element 23 via the switch line 25. Thereby, supply of power from the vehicle-mounted power source 19 to the speed change control apparatus 17 is cut and the speed change control of the speed change control apparatus 17 is stopped. Further, at step S62, when it is determined that the rotational speed of the primary sheave 6 is not 0 rpm, at step S63, the gear ratio is changed to low by a map control similar to that of the above-described first embodiment.

Thereafter, at step S64, it is determined whether the sheave position becomes low. When it is determined that the sheave position does not become low at step S64, the operation returns to step S62, and when it is determined that the sheave position becomes low at step S64, the operation proceeds to step S65. At step S65, it is determined whether the rotational speed of the primary sheave 6 becomes 0 rpm, and when it is determined that the rotational speed of the primary sheave 6 does not become 0 rpm, at step S66, the sheave target value is set to low and the speed change control is continued. Further, determinations at step S64 and step S65 are repeated. In this case, according to the speed change control apparatus 17, the gear ratio is maintained to be low until the rotational speed of the primary sheave 6 becomes 0 rpm. Thereafter, when the rotational speed of the primary sheave 6 becomes 0 rpm, at step S65, it is determined that the rotational speed of the primary sheave 6 is 0 rpm, at step S67, the relay circuit 21 is cut and the processing is finished.

Here, when the gear ratio control is continued after making the main switch 18 OFF, in the case in which a road is a downhill, there is a case in which the gear ratio is varied from low to a top side owing to the fact that the vehicle speed is increased. According to the seventh embodiment, as described above, after the engine 2 is instructed to stop by making the main switch 18 OFF, when the gear ratio becomes low, the gear ratio is maintained to be low until the rotational speed of the primary sheave 6 becomes 0 rpm. In this way, according to the seventh embodiment, the gear ratio is maintained to be low and therefore, the engine brake can further excellently be worked in comparison with the case of varying the gear ratio to the top side. Thereby, the vehicle speed can further be restrained from being increased and therefore, the operability of the driver can further be promoted.

Further, other effect of the seventh embodiment is similar to that of the above-described fourth embodiment.

### (Eighth Embodiment)

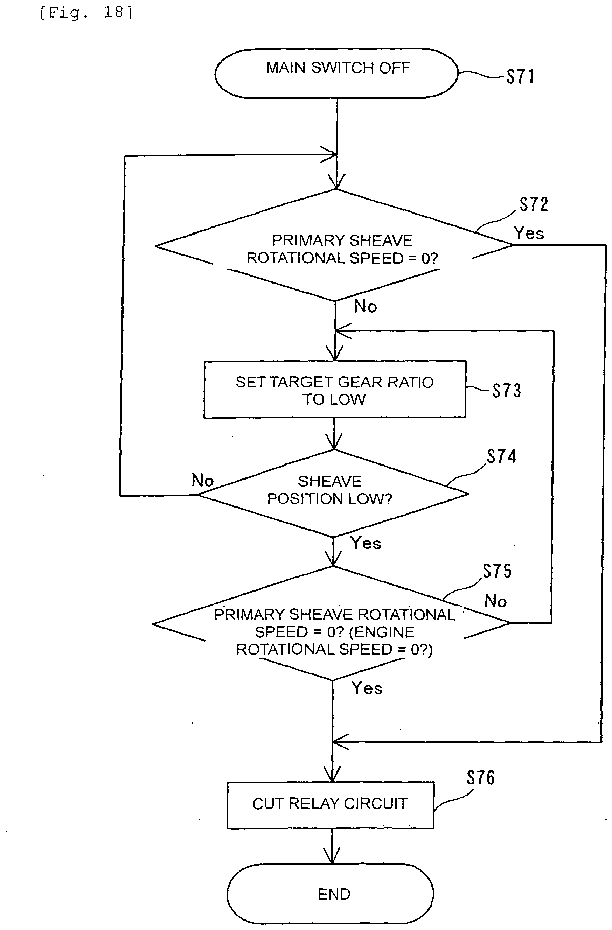

Fig. 18 is a diagram showing a processing flow of a speed change control apparatus when the main switch is made OFF according to an eighth embodiment. According to the eighth embodiment, different from the above-described sixth and seventh embodiments, an explanation will be given of an example of constituting such that when the main switch 18 is made OFF, the target gear ratio is set to low without executing a map control. Further, other constitution of the eighth embodiment is similar to those of the above-described sixth and seventh embodiments. An explanation will be given of operation of the speed change control apparatus 17 according to the eighth embodiment in reference to Fig. 2, Fig. 13 and Fig. 18.

At step S71 shown in Fig. 18, when the main switch 18 is made OFF, the main switch signal (refer to Fig. 2 and Fig. 13) is not supplied to the speed change control apparatus 17. Further, at step S72, it is determined whether the rotational speed of the primary sheave 6 is 0 rpm. At step S72, when it is determined that the rotational speed of the primary sheave 6 is 0 rpm (stationary state), at step S76, the relay circuit 21 is cut and the processing is finished by bringing the relay switch 22 from the closed state (ON state) to the open state (OFF state) by stopping to apply a voltage from the self holding circuit 17a to the switch control element 23 via the switch line 25. Thereby, supply of power from the vehicle-mounted power source 19 to the speed change control apparatus 17 is cut and the speed change control of the speed change control apparatus 17 is stopped. Further, at step S72, when it is determined that the rotational speed of the primary sheave 6 is not 0 rpm (running state), at step S73, the target gear ratio (sheave target value) is fixedly set to low. Thereby, the movable sheave 6b of the primary sheave 6 is immediately moved to a position of low by using the sheave position moving apparatus 12.

Thereafter, at step S74, it is determined whether the sheave position becomes low. When it is determined that the sheave position does not become low at step S74, the operation returns to step S72, and when it is determined that the sheave position becomes low at step S74, the operation proceeds to step S75. At step S75, it is determined whether the rotational speed of the primary sheave 6 becomes 0 rpm, and when it is determined that the rotational speed of the primary sheave 6 does not become 0 rpm, the operation returns to step S73 and determinations at step S74 and step S75 are repeated. In this case, according to the speed change control apparatus 17, the gear ratio is maintained to be low until the rotational speed of the primary sheave 6 becomes 0 rpm. Thereafter, when the rotational speed of the primary sheave 6 becomes 0 rpm, it is determined that the rotational speed of the primary sheave 6 is 0 rpm at step 75, at step S76, the relay circuit 21 is cut and the processing is finished.

According to the eighth embodiment, as described above, after the engine 2 is instructed to stop by making the main switch 18 OFF, when the rotational speed of the primary sheave 6 is larger than 0 rpm, the target gear ratio (sheave target value) of the continuously variable transmission 4 is set to be low. Thereby, in comparison with the case of using the map control, the gear ratio of the continuously variable transmission 4 can fast be proximate to low.

Further, other effect of the eighth embodiment is similar to those of the above-described sixth embodiment and the seventh embodiment.

Further, the embodiments disclosed this time are to be conceived to be exemplifications and not to be restrictive in all of aspects thereof.

For example, although according to the above-described embodiments, the scooter type motor cycle is shown as an example of the present vehicle, a vehicle other than the scooter type motor cycle so far as the vehicle is a vehicle having a continuously variable transmission may be used.

Further, although according to the above-described embodiments, an explanation has been given of the case of setting the vehicle speed and the predetermined value of the rotational speed of the primary sheave in interrupting the speed change control by the speed change control apparatus to 0, the vehicle speed and the predetermined value of the rotational speed of the primary sheave in interrupting the speed change control by the speed change control apparatus may be set to a value other than 0.

Further, although according to the third embodiment through the eighth embodiment, the rotational speed of the primary sheave is detected by the engine rotational speed sensor or the primary sheave rotational speed sensor and when the primary sheave rotational speed becomes 0 rpm, the speed change control is stopped, the secondary sheave rotational speed may be detected by the secondary sheave rotational speed sensor or the rear wheel rotational speed sensor and the speed change control may be stopped when the secondary sheave rotational speed becomes 0 rpm.

Further, although according to the above-described embodiments, an example of providing the belt type continuously variable transmission is provided to a motor cycle, a motor cycle may be provided with a continuously variable transmission of a troidal type, or may be provided with a continuously variable transmission of other than the troidal type.

Further, although according to the above-described embodiments, an example of using the engine constituted by the internal combustion engine for the drive force generating means is shown, an electric motor may be used for the drive force generating means.

Further, although according to the third embodiment through the fifth embodiment, an example of cutting the relay circuit and the finishing the processing when it is determined that the sheave position becomes low is shown, when it is determined that the.sheave position becomes low, after the primary sheave rotational speed or the engine rotational speed becomes 0 rpm, the relay circuit may be cut and the processing may be finished.

Within the description above, there is disclosed (amongst others), according to a first aspect, a vehicle comprising drive force generating means, a first switch for controlling the drive force generating means by a driver, a continuously variable transmission for transmitting a drive force generated by the drive force generating means to a drive wheel, and speed change controlling means for controlling a gear ratio of the continuously variable transmission and continuously controlling the gear ratio of the continuously variable transmission after the drive force generating means is instructed to stop by making the first switch OFF by the driver.

The vehicle according to the first aspect is provided with the speed change controlling means for continuously controlling the gear ratio of the continuously variable transmission after the drive force generating means is instructed to stop by making the first switch OFF. Thereby, even after the drive force generating means is instructed to stop by making the first switch OFF by a driver in running, the gear ratio of the continuously variable transmission can continuously be controlled by the speed change controlling means and therefore, the gear ratio of the continuously variable transmission can be made to be proximate to low in running (before stopping). Thereby, in a starting operation at a succeeding time, the drive force generating means can be started in a state of being low or proximate to be low and therefore, the drive force generated by the drive force generating means can be converted into a large torque to transmit to the drive wheel. As a result, smooth starting can be carried out. Further, even after the drive force generating means is instructed to stop by making the first switch OFF in running, the continuously variable transmission can be made to be proximate to low in running (before stopping) and therefore, it is not necessary to return the gear ratio of the continuously variable transmission to low in the starting operation at a succeeding time after stopping. Thereby, a time period until starting after the starting operation can be shortened. Further, by continuously controlling the gear ratio of the continuously variable transmission after the drive force generating means is instructed to stop, the vehicle can be run by inertia while executing the speed change control to the low side by the speed change controlling means. Thereby, even after the drive force generating means is instructed to stop, the vehicle can be run in a state of being easy to work engine brake and therefore, operability can be promoted.

Preferably, the vehicle according to the first aspect further comprises power supplying means for supplying a power to the speed change controlling means, wherein the power supplying means maintains to supply the power to the speed change controlling means to continue a speed change control when a vehicle speed is larger than a predetermined value after the drive force generating means is instructed to stop by making the first switch OFF. When constituted in this way, even after the drive force generating means is instructed to stop by making the first switch OFF in running, the speed change controlling means can continue to control the gear ratio of the continuously variable transmission until the vehicle speed becomes equal to or smaller than the predetermined value and therefore, easily, the gear ratio of the continuously variable transmission can be made to be proximate to low.

In the vehicle according to the above-described aspect, preferably, the speed change controlling means controls the continuously variable transmission when a vehicle speed is larger than a predetermined value after the drive force generating means is instructed to stop by making the first switch OFF. When constituted in this way, even after the drive force generating means is instructed to stop by making the first switch OFF in running, the gear ratio of the continuously variable transmission can easily be made to be proximate to low.

When the vehicle speed is larger than the predetermined value, in the vehicle for controlling the continuously variable transmission, preferably, the speed change controlling means controls the continuously variable transmission based on a map for a speed change control when the vehicle speed is larger than the predetermined value after the drive force generating means is instructed to stop by making the first switch OFF. When constituted in this way, ever after the drive force generating means is instructed to stop by making the first switch OFF in running, easily, the gear ratio of the continuously variable transmission can be made to be proximate to low by using the map for the speed change control.

When the vehicle speed is larger than the predetermined value, in the vehicle for controlling the continuously variable transmission, preferably, the speed change controlling means sets a target gear ratio of the continuously variable transmission to a value on a low side when the vehicle speed is larger than the predetermined value after the drive force generating means is instructed to stop by making the first switch OFF. When constituted in this way, after the drive force generating means is instructed to stop by making the first switch OFF in running, in comparison with the case of using the map for the speed change control, the gear ratio of the continuously variable transmission can fast be proximate to low.

When the vehicle speed is larger than the predetermined value, in the vehicle for controlling the continuously variable transmission, preferably, when the gear ratio becomes a predetermined value on a low side after the drive force generating means is instructed to stop by making the first switch OFF, the speed change controlling means maintains the predetermined gear ratio on the low side until the vehicle speed becomes equal to or smaller than the predetermined value. When constituted in this way, even when a road becomes a downhill after the gear ratio becomes the predetermined value on the low side after making the first switch OFF, the gear ratio is not varied from the low side to a top side owing to an increase in a vehicle speed. Therefore, the vehicle can be run on the downhill in a state of working the engine brake. Thereby, the operability of the driver can further be promoted.

Preferably, the vehicle according to the above-described aspect further comprises power supplying means for supplying a power to the speed change controlling means, and a second switch connected between the power supplying means and the speed change controlling means and made to be ON in response to making the first switch ON, wherein when the vehicle speed is larger than the predetermined value after the drive force generating means is instructed to stop by making the first switch OFF, the speed change controlling means maintains an ON state of the second switch and bring the second switch into an OFF state when the vehicle speed becomes equal to or smaller than the predetermined value. When constituted in this way, in the case in which the first switch is made OFF by the driver in running, the power is continuously supplied from the power supplying means to the speed change controlling means by maintaining the second switch in the ON state, and supply of power from the power supplying means to the speed change controlling means is cut by making the second switch OFF when the vehicle speed becomes equal to or smaller than the predetermined value. Thereby, the gear ratio can be proximate to low even after making the first switch OFF and when the vehicle speed becomes equal to or smaller than the predetermined value, easily, the control of the gear ratio by the speed change controlling means can be stopped.

When the vehicle speed is larger than the predetermined value, in the vehicle in which the speed change controlling means controls the continuously variable transmission, preferably, the predetermined value of the vehicle speed is 0. When constituted in this way, the gear ratio of the continuously variable transmission can be made to be proximate to low until stopping the vehicle and therefore, the gear ratio of the continuously variable transmission can further be made to be proximate to low.

In the vehicle according to the above-described aspect, preferably, the speed change controlling means continuously controls the gear ratio by setting a target gear ratio of the continuously variable transmission to a predetermined value on a low side when the gear ratio becomes the predetermined value on the low side. When constituted in this way, even when the road becomes the downhill after the gear ratio becomes the predetermined value on the low side after making the first switch OFF, the gear ratio is not varied from the low side to the top side owing to an increase in the vehicle speed. Thereby, the vehicle can run on the downhill in the state of working the engine brake. As a result, operability of the driver can further be promoted.

Preferably, in the vehicle according to the above-described aspect, the continuously variable transmission includes first drive force transmitting means transmitted with a drive force from the drive force generating means and second drive force transmitting means for transmitting the drive force from the first drive force transmitting means to the drive wheel, wherein the speed change controlling means continuously controls the gear ratio of the continuously variable transmission by detecting rotation of at least one of the first drive force transmitting means and the second drive force transmitting means.

When constituted in this way, even after the drive force generating means is instructed to stop, the gear ratio of the continuously variable transmission can be controlled until the rotational speed of at least one of the first drive force transmitting means and the second drive force transmitting means becomes, for example equal to or smaller than the predetermined value and therefore, the gear ratio of the continuously variable transmission can easily be made to be proximate to low. Further, when the rotational speed of at least one of the first drive force transmitting means and the second drive force transmitting means becomes, for example, equal to or smaller than the predetermined value, the gear ratio of the continuously variable transmission is not controlled and therefore, the gear ratio of the continuously variable transmission can be restrained from being changed after stopping to rotate the first drive force transmitting means and the second drive force transmitting means. When the belt type continuously variable transmitting mission is used, the gear ratio of the continuously variable transmission is not changed after stopping to rotate the first drive force transmitting means and the second drive force transmitting means and therefore, a tension of the belt member can pertinently be maintained. Thereby, it can be restrained that there is brought about a drawback of damaging the belt member when the engine is restarted in a state of loosening the belt member.

In the vehicle in which the continuously variable transmission includes the first drive force transmitting means and the second drive force transmitting means, preferably, the speed change controlling means stops to control the continuously variable transmission when a rotational speed of at least one of the first drive force transmitting means and the second drive force transmitting means becomes equal to or smaller than a predetermined value. When constituted in this way, in the case in which the rotational speed of either one of the first drive force transmitting means and the second drive force transmitting means becomes equal to or smaller than the predetermined rotational speed, the gear ratio of the continuously variable transmission is not controlled and therefore, after stopping to rotate the first drive force transmitting means and the second drive force transmitting means, the gear ratio of the continuously variable transmission can easily be restrained from being controlled.

Preferably, the vehicle in which the continuously variable transmission includes the first drive force transmitting means and the second drive force transmitting means further comprises a clutch arranged at either one of between the second drive force transmitting means and the drive wheel or between the drive force generating means and the first drive force transmitting means. When the clutch is, for example, a centrifugal clutch, in the case of arranging the centrifugal clutch between the second drive force transmitting means and the drive wheel, the centrifugal clutch does not transmit the drive force when the rotational speed becomes equal to or smaller than the predetermined rotational speed and therefore, whereas the first drive force transmitting means and the second drive force transmitting means are stopped to rotate, the vehicle continues to run. In this case, when the gear ratio is continued to control until the vehicle speed becomes equal to or smaller than the predetermined value after stopping to rotate the first drive force transmitting means and the second drive force transmitting means, even after stopping the first drive force transmitting means and the second drive force transmitting means, the gear ratio of the continuously variable transmission is controlled and therefore, the belt member is loosened by moving only the sheave of the first drive force transmitting means to the low side in the state of stopping the sheave of the second drive force transmitting means as described above. Therefore, particularly, when the centrifugal clutch is provided, it is effective to restrain the belt member from being loosened by preventing the gear ratio of the continuously variable transmission from being controlled when the rotational speed of at least one of the first drive force transmitting means and the second drive force transmitting means becomes equal to or smaller than the predetermined value by using the constitution of controlling the gear ratio of the continuously variable transmission by detecting rotation of at least one of the first drive force transmitting means and the second drive force transmitting means. Further, when the clutch is, for example, the centrifugal clutch, in the case of arranging the centrifugal clutch between the drive force generating means and the first drive force transmitting means, when the rotational speed of the centrifugal clutch becomes equal to or smaller than the predetermined rotational speed, the drive force of the drive force generating means is not transmitted to the first drive force transmitting means and therefore, when the rotational speed of the centrifugal clutch becomes equal to or smaller than the predetermined rotational speed, the rotational speed of the first drive force transmitting means cannot be detected by detecting rotation of the drive force generating means. Therefore, particularly, when the centrifugal clutch is provided, it is effective to restrain the belt member from being loosened by preventing the gear ratio of the continuously variable transmission from being controlled when the rotational speed of at least one of the first drive force transmitting means and the second drive force transmitting means becomes equal to or smaller than the predetermined value by using the constitution of controlling the gear ratio of the continuously variable transmission by directly detecting rotation of at least one of the first drive force transmitting means and the second drive force transmitting means.

Preferably, the vehicle having the clutch arranged to either one of between the second drive force transmitting means and the drive wheel or between the drive force generating means and the first drive force transmitting means further comprises the clutch arranged between the second drive force transmitting means and the drive wheel, wherein the speed change controlling means continuously controls the continuously variable transmission by detecting rotation of the drive force generating means and stops to control the continuously variable transmission when a rotational speed of the drive force generating means becomes equal to or smaller than a predetermined value. When constituted in this way, in the case in which the rotational speed of the drive force generating means becomes equal to or smaller than the predetermined value, the gear ratio of the continuously variable transmission is not controlled and therefore, the gear ratio of the continuously variable transmission can easily be restrained from being controlled after stopping to rotate the first drive force transmitting means and the second drive force transmitting means. Thereby, the belt member can easily be restrained from being loosened by moving only the sheave of the first drive force transmitting means to the low side in the state of stopping the sheave of the second drive force transmitting means owing to the fact that the gear ratio of the continuously variable transmission is controlled after stopping to rotate the first drive force transmitting, means and the second drive force transmitting means.

Preferably, the vehicle having the clutch arranged at either one of between the second drive force transmitting means and the drive wheel or between the drive force generating means and the first drive force transmitting means further comprises the clutch arranged between the drive force generating means and the first drive force transmitting means, wherein the speed change controlling means continuously controls the continuously variable transmission by detecting rotation of the first drive force transmitting means. When constituted in this way, the rotational speed of the continuously variable transmission can easily be detected.

In the vehicle having the clutch arranged between the drive force generating means and the first drive force transmitting means, preferably, the speed change controlling means stops to control the continuously variable transmission when a rotational speed of the first drive force transmitting means becomes equal to or smaller than a predetermined value. When constituted in this way, in the case in which the rotational speed of the first drive force transmitting means becomes equal to or smaller than the predetermined value, the gear ratio of the continuously variable transmission is not controlled and therefore, the gear ratio of the continuously variable transmission can easily be restrained from being controlled after stopping to rotate the first drive force transmitting means and the second drive force transmitting means. Thereby, when the belt type continuously variable transmission is used, the belt member can easily be restrained from being loosened by moving only the sheave of the first drive force transmitting means to the lower side in the state of stopping the sheave of the second drive force transmitting means owing to the fact that the gear ratio of the continuously variable transmission is controlled after stopping to rotate the first drive force transmitting means and the second drive force transmitting means.

In the vehicle for stopping to control the continuously variable transmission when the rotational speed of at least one of the first drive force transmitting means and the second drive force transmitting means, the rotational speed of the drive force generating means, or the rotational speed of the first drive force transmitting means becomes equal to or smaller than the predetermined value, the predetermined value is 0. When constituted in this way, the gear ratio of the continuously variable transmission can be proximate to low until the rotational speed of the first drive force transmitting means, the second drive force transmitting means or the drive force generating means becomes 0 and therefore, the gear ratio of the continuously variable transmission can further be made to be proximate to low.

In the vehicle in which the continuously variable transmission includes the first drive force transmitting means and the second drive force transmitting means, preferably, the continuously variable transmission is an electrically controlled belt type continuously variable transmission. When the belt type continuously variable transmission which is electrically controlled in this way is used, the gear ratio of the continuously variable transmission can easily be controlled. Further, when, for example, a belt type continuously variable transmission in which only the first drive force transmitting means is electrically controlled is used, it is easy to bring about a drawback that the belt member is loosened by moving only the sheave of the first drive force transmitting means to the low side in the state of stopping the sheave of the second drive force transmitting means owing to the fact that the gear ratio of the continuously variable transmission is controlled after stopping to rotate the first drive force transmitting means and the second drive force transmitting means. In this case, it is effective to restrain the belt member from being loosened by preventing the gear ratio of the continuously variable transmission from being controlled when the rotational speed of at least one of the first drive force transmitting means and the second drive force transmitting means becomes equal to or smaller than the predetermined value by using the constitution of controlling the gear ratio of the continuously variable transmission by detecting rotation of at least one of the first drive force transmitting means and the second drive force transmitting means.

In the vehicle having the belt type continuously variable transmission, preferably, a belt member of the belt type continuously variable transmission is formed by an elastomer. The belt member comprising the elastomer is liable to be damaged when the belt member is loosened. Therefore, the gear ratio of the continuously variable transmission is prevented from being controlled when the rotational speed of at least one of the first drive force transmitting means and the second drive force transmitting means becomes equal to or smaller than the predetermined value by using the constitution of controlling the gear ratio of the continuously variable transmission by detecting rotation of at least one of the first drive transmitting means and the second drive force transmitting means.

Thereby, the tension of the belt member can pertinently be maintained and therefore, the damage of the belt member owing to loosening of the belt member can be restrained.

Preferably, the vehicle in which the continuously variable transmission includes the first drive force transmitting means and the second drive force transmitting means further comprises the first drive force transmitting means transmitted with the drive force from the drive force generating means, and the second drive force transmitting means for transmitting the drive force from the first drive force transmitting means to the drive wheel, wherein the speed change controlling means controls the gear ratio of the continuously variable transmission by electrically controlling only either one of the first drive force transmitting means and the second drive force transmitting means. For example, when the belt type continuously variable transmission in which only the first drive force transmitting means is electrically controlled is used, it is easy to bring about a drawback that the belt member is loosened by moving only the sheave on the side of the first drive force transmitting means to the low side in the state of stopping the sheave of the second drive force transmitting means owing to the fact that the gear ratio of the continuously variable transmission is controlled after stopping to rotate the first drive force transmitting means and the second drive force transmitting means. However, it is particularly effective to restrain loosening of the belt member by preventing the gear ratio of the continuously variable transmission from being controlled when the rotational speed of at least one of the first drive force transmitting means and the second drive force transmitting means becomes equal to or smaller than the predetermined value by using the constitution of controlling the gear ratio of the continuously variable transmission by detecting rotation of at least one of the first drive force transmitting means and the second drive force transmitting means.

In view of the above, there is provided preferably a vehicle comprising: drive force generating means; a first switch for controlling the drive force generating means by a driver; a continuously variable transmission for transmitting a drive force generated by the drive force generating means to a drive wheel; and speed change controlling means for controlling a gear ratio of the continuously variable transmission and continuously controlling the gear ratio of the continuously variable transmission after the drive force generating means is instructed to stop by making the first switch OFF by the driver.

The vehicle might further comprise: power supplying means for supplying a power to the speed change controlling means; wherein the power supplying means maintains to supply the power to the speed change controlling means to continue a speed change control when a vehicle speed is larger than a predetermined value after the drive force generating means is instructed to stop by making the first switch OFF.

The speed change controlling means might control the continuously variable transmission when a vehicle speed is larger than a predetermined value after the drive force generating means is instructed to stop by making the first switch OFF. Therein, the speed change controlling means might control the continuously variable transmission based on a map for a speed change control when the vehicle speed is larger than the predetermined value after the drive force generating means is instructed to stop by making the first switch OFF.

Likewise, the speed change controlling means might set a target gear ratio of the continuously variable transmission to a value on a low side when the vehicle speed is larger than the predetermined value after the drive force generating means is instructed to stop by making the first switch OFF.

When the gear ratio becomes a predetermined value on a low side after the drive force generating means is instructed to stop by making the first switch OFF, the speed change controlling means might maintain the predetermined gear ratio on the low side until the vehicle speed becomes equal to or smaller than the predetermined value.

The vehicle might further comprise: power supplying means for supplying a power to the speed change controlling means; and a second switch connected between the power supplying means and the speed change controlling means and made to be ON in response to making the first switch ON; wherein when the vehicle speed is larger than the predetermined value after the drive force generating means is instructed to stop by making the first switch OFF, the speed change controlling means maintains an ON state of the second switch and bring the second switch into an OFF state when the vehicle speed becomes equal to or smaller than the predetermined value.

Preferably, the predetermined value of the vehicle speed is 0.

Further, the speed change controlling means might continuously control the gear ratio by setting a target gear ratio of the continuously variable transmission to a predetermined value on a low side when the gear ratio becomes the predetermined value on the low side.

Moreover, the continuously variable transmission might include first drive force transmitting means transmitted with a drive force from the drive force generating means and second drive force transmitting means for transmitting the drive force from the first drive force transmitting means to the drive wheel; and wherein the speed change controlling means continuously controls the gear ratio of the continuously variable transmission by detecting rotation of at least one of the first drive force transmitting means and the second drive force transmitting means.

The speed change controlling means might stop to control the continuously variable transmission when a rotational speed of at least one of the first drive force transmitting means and the second drive force transmitting means becomes equal to or smaller than a predetermined value.

The vehicle might further comprise: a clutch arranged at either one of between the second drive force transmitting means and the drive wheel or between the drive force generating means and the first drive force transmitting means.

The vehicle might further comprise: the clutch arranged between the second drive force transmitting means and the drive wheel; wherein the speed change controlling means continuously controls the continuously variable transmission by detecting rotation of the drive force generating means and stops to control the continuously variable transmission when a rotational speed of the drive force generating means becomes equal to or smaller than a predetermined value.

The vehicle might further comprise: the clutch arranged between the drive force generating means and the first drive force transmitting means; wherein the speed change controlling means continuously controls the continuously variable transmission by detecting rotation of the first drive force transmitting means.

The speed change controlling means might stop to control the continuously variable transmission when a rotational speed of the first drive force transmitting means becomes equal to or smaller than a predetermined value.

The predetermined value might be 0.

The continuously variable transmission might be an electrically controlled belt type continuously variable transmission.

A belt member of the belt type continuously variable transmission might be formed by an elastomer.

The vehicle might further comprise: the first drive force transmitting means transmitted with the drive force from the drive force generating means; and the second drive force transmitting means for transmitting the drive force from the first drive force transmitting means to the drive wheel; wherein the speed change controlling means controls the gear ratio of the continuously variable transmission by electrically controlling only either one of the first drive force transmitting means and the second drive force transmitting means.

Thus, according to a most preferred embodiment, in order to provide a vehicle capable of pertinently setting a gear ratio when a driver cuts a main switch in running, the vehicle (motor cycle 1) is provided with an engine 2, a main switch 18 for controlling the engine 2 by a driver, a continuously variable transmission 4 for transmitting a drive force generated at the engine 2 to a rear wheel 3, and a speed change control apparatus 17 for controlling a gear ratio of the continuously variable transmission 4 and continuously controlling the gear ratio of the continuously variable transmission 4 after the engine 2 is instructed to stop by making the main switch 18 OFF by the driver.

## Claims

1. Vehicle, in particular a motor cycle, comprising:
a drive force generating means (2);
a first switch (18) for controlling said drive force generating means (2) by a driver;
a continuously variable transmission (4) for transmitting a drive force generated by the drive force generating means (2) to a drive wheel (3), said continuously variable transmission (4) is provided with a sheave position moving apparatus (12) for moving a position of a movable sheave (6b) of a primary sheave (6) of the continuously variable transmission (4) for changing a gear ratio of the continuously variable transmission (4); and
a speed change controlling means (17) for controlling the gear ratio of the continuously variable transmission (4),
**characterized in that** said sheave position moving apparatus (12) is electrically moving the position of the movable sheave (6b) and said speed change controlling means (17) is provided for continuously controlling the gear ratio of the continuously variable transmission (4) after the drive force generating means (2) is instructed to stop by switching the first switch (18) to an "OFF"-state.

2. Vehicle according to claim 1, **characterized in that** the speed change controlling means (17) controls the continuously variable transmission (4) when a vehicle speed is larger than a predetermined vehicle speed value after the drive force generating means (2) is instructed to stop by switching the first switch (18) to the "OFF"-state.

3. Vehicle according to claim 2, **characterized in that** the speed change controlling means (17) controls the continuously variable transmission (4) based on a map for a speed change control when the vehicle speed is larger than the predetermined vehicle speed value after the drive force generating means (2) is instructed to stop by switching the first switch (18) to the "OFF"-state.

4. Vehicle according to claim 2, **characterized in that** the speed change controlling means (17) sets a target gear ratio of the continuously variable transmission (4) to a value on a low side when the vehicle speed is larger than the predetermined vehicle speed value after the drive force generating means (2) is instructed to stop by switching the first switch (18) to the "OFF"-state.

5. Vehicle according to one of the claims 2 to 4, **characterized in that** when the gear ratio becomes a predetermined gear ratio value on a low side after the drive force generating means (2) is instructed to stop by switching the first switch (18) to the "OFF"-state, the speed change controlling means (17) maintains the predetermined gear ratio on the low side until the vehicle speed becomes equal to or smaller than the predetermined vehicle speed value.

6. Vehicle according to one of the claims 2 to 5, **characterized by** a power supplying means (18) for supplying a power to the speed change controlling means (17).

7. Vehicle according to claim 6, **characterized in that** the power supplying means (18) maintains to supply the power to the speed change controlling means (17) to continue a speed change control when the vehicle speed is larger than the predetermined vehicle speed value after the drive force generating means (2) is instructed to stop by switching the first switch (18) to the "OFF"-state.

8. Vehicle according to claim 6 or 7, **characterized by** a second switch (22) connected between the power supplying means (19) and the speed change controlling means (17) and made to be in an "ON"-state in response to switching the first switch to the "ON"-state, wherein when the vehicle speed is larger than the predetermined vehicle speed value after the drive force generating means (2) is instructed to stop by switching the first switch (18) to the "OFF"-state, the speed change controlling means (17) maintains an "ON"-state of the second switch (22) and brings the second switch (22) into an "OFF"-state when the vehicle speed becomes equal to or smaller than the predetermined vehicle speed value.

9. Vehicle according to one of the claims 2 to 8, **characterized in that** the predetermined vehicle speed value of the vehicle speed is zero.

10. Vehicle according to claim 1, **characterized in that** the speed change controlling means (17) continuously controls the gear ratio by setting a target gear ratio of the continuously variable transmission (4) to a predetermined gear ratio value on a low side when the gear ratio becomes the predetermined gear ratio value on the low side.

11. Vehicle according to one of the claims 1 to 10, **characterized in that** the continuously variable transmission (4) includes a first drive force transmitting means (6) transmitted with a drive force from the drive force generating means (2) and a second drive force transmitting means (10) for transmitting the drive force from the first drive force transmitting means (6) to the drive wheel (3), wherein the speed change controlling means (17) continuously controls the gear ratio of the continuously variable transmission (4) by detecting rotation of at least one of the first drive force transmitting means (6) and the second drive force transmitting means (10).

12. Vehicle according to claim 11, **characterized in that** the speed change controlling means (17) stops to control the continuously variable transmission (4) when a rotational speed of the first drive force transmitting means (6) becomes equal to or smaller than a predetermined rotational speed value of the first drive force transmitting means (6), or the speed change controlling means (17) stops to control the continuously variable transmission (4) when a rotational speed of the second drive force transmitting means (10) becomes equal to or smaller than a predetermined rotational speed value of the second drive force transmitting means (10).

13. Vehicle according to claim 12, **characterized by** a clutch (7) arranged at either one of between the second drive force transmitting means (10) and the drive wheel (3) or between the drive force generating means (2) and the first drive force transmitting means (6).

14. Vehicle according to claim 13, **characterized in that** the clutch (7) is arranged between the second drive force transmitting means (10) and the drive wheel (3), wherein the speed change controlling means (17) continuously controls the continuously variable transmission (4) by detecting rotation of the drive force generating means (2) and stops to control the continuously variable transmission (4) when a rotational speed of the drive force generating means (2) becomes equal to or smaller than a predetermined rotational speed value of the drive force generating means (2).

15. Vehicle according to claim 14, **characterized in that** the speed change controlling means (17) stops to control the continuously variable transmission (4) when the rotational speed of the first drive force transmitting means (6) becomes equal to or smaller than a predetermined rotational speed value of the first drive force transmitting means (6).

16. Vehicle according to claim 13, **characterized in that** the clutch (7) is arranged between the drive force generating means (2) and the first drive force transmitting means (6), wherein the speed change controlling means (17) continuously controls the continuously variable transmission (4) by detecting rotation of the first drive force transmitting means (6).

17. Vehicle according to one of the claims 12 to 16, **characterized in that** the predetermined rotational speed value of at least one of the first drive force transmitting means (6), the second drive force transmitting means (10) and the drive force generating means (2) is zero.

18. Vehicle according to one of the claims 1 to 17, **characterized in that** the continuously variable transmission (4) is an electrically controlled belt type continuously variable transmission.

19. Vehicle according to claim 18, **characterized in that** a belt member (11) of the belt type continuously variable transmission (4) is formed by an elastomer.

20. Vehicle according to one of the claims 11 to 19, **characterized in that** the speed change controlling means (17) controls the gear ratio of the continuously variable transmission (4) by electrically controlling only either one of the first drive force transmitting means (6) and the second drive force transmitting means (10).

21. Method of controlling a vehicle, in particular a motor cycle, having a continuously variable transmission (4) and a speed change controlling means (17) for controlling the gear ratio of the continuously variable transmission (4), **characterized in that** a gear ratio of the continuously variable transmission (4) is continued to be controlled by holding power supply to the speed change controlling means (17) after an engine (2) of the vehicle is instructed to stop during a running state of the engine (2), the control of the gear ratio is stopped by stopping power supply to the speed change controlling means (17) when the vehicle speed becomes zero.

22. Method according to claim 21, **characterized in that** the gear ratio is shifted during the continued control period to the low side of the transmission.

## Patentansprüche

1. Ein Fahrzeug, insbesondere ein Motorrad, das umfasst:
eine Antriebs-Kraft-Erzeugungseinrichtung (2);
einen ersten Schalter (18), zum Steuern dieser Antriebs-Kraft-Erzeugungseinrichtung (2) durch einen Fahrer;
ein kontinuierlich variables Getriebe (4), zum Übertragen einer Antriebs-Kraft, welche durch die Antriebs-Kraft-Erzeugungseinrichtung (2) erzeugt ist, auf ein Antriebs-Rad (3), dieses kontinuierlich variable Getriebe (4) ist mit einem Scheiben-Positions-Bewegungsgerät (12) vorgesehen, zum Bewegen einer Position einer bewegbaren Scheibe (6b) einer primären Scheibe (6) des kontinuierlich variablen Getriebes (4), zum Ändern eines Getriebe-Verhältnisses des kontinuierlich variablen Getriebes (4); und
eine Geschwindigkeits-Änderungs-Steuerungseinrichtung (17), zum Steuern des Getriebe-Verhältnisses des kontinuierlich variablen Getriebes (4), **dadurch gekennzeichnet, dass** dieses Scheiben-Positions-Bewegungsgerät (12) die Position der bewegbaren Scheibe (6b) elektrisch bewegt und diese Geschwindigkeits-Änderungs-Steuerungseinrichtung (17) vorgesehen ist, zum kontinuierlichen Steuern des Getriebe-Verhältnisses des kontinuierlich variablen Getriebes (4), nachdem die Antriebs-Kraft-Erzeugungseinrichtung (2) instruiert ist, anzuhalten, durch Schalten des ersten Schalters (18) in einen "AUS"-Zustand.

2. Das Fahrzeug gemäß Anspruch 1, **dadurch gekennzeichnet, dass** die Geschwindigkeits-Änderungs-Steuerungseinrichtung (17) das kontinuierlich variable Getriebe (4) steuert, wenn eine Fahrzeug-Geschwindigkeit größer ist als ein vorgegebener Fahrzeug-Geschwindigkeits-Wert, nachdem die Antriebs-Kraft-Erzeugungseinrichtung (2) instruiert ist, anzuhalten, durch Schalten des ersten Schalters (18) in den "AUS"-Zustand.

3. Das Fahrzeug gemäß Anspruch 2, **dadurch gekennzeichnet, dass** die Geschwindigkeits-Änderungs-Steuerungseinrichtung (17) das kontinuierlich variable Getriebe (4) steuert aufgrund eines Kennfelds für eine Geschwindigkeits-Änderungs-Steuerung, wenn die Fahrzeug-Geschwindigkeit größer ist als der vorgegebene Fahrzeug-Geschwindigkeits-Wert, nachdem die Antriebs-Kraft-Erzeugungseinrichtung (2) instruiert ist, anzuhalten, durch Schalten des ersten Schalters (18) in den "AUS"-Zustand.

4. Das Fahrzeug gemäß Anspruch 2, **dadurch gekennzeichnet, dass** die Geschwindigkeits-Änderungs-Steuerungseinrichtung (17) ein Ziel-Getriebe-Verhältnis des kontinuierlich variablen Getriebes (4) auf einen Wert an einer niedrigen Seite setzt, wenn die Fahrzeug-Geschwindigkeit größer ist als der vorgegebene Fahrzeug-Geschwindigkeits-Wert, nachdem die Antriebs-Kraft-Erzeugungseinrichtung (2) instruiert ist, anzuhalten, durch Schalten des ersten Schalters (18) in den "AUS"-Zustand.

5. Fahrzeug gemäß einem der Ansprüche 2 bis 4, **dadurch gekennzeichnet, dass,** wenn das Getriebe-Verhältnis ein vorgegebener Getriebe-Verhältniswert an einer niedrigen Seite wird, nachdem die Antriebs-Kraft-Erzeugungseinrichtung (2) instruiert ist, anzuhalten, durch Schalten des ersten Schalters (18) in den "AUS"-Zustand, hält die Geschwindigkeits-Änderungs-Steuerungseinrichtung (17) das vorgegebene Getriebe-Verhältnis an der niedrigen Seite aufrecht, bis die Fahrzeug-Geschwindigkeit gleich oder geringer als der vorgegebene Fahrzeug-Geschwindigkeits-Wert wird.

6. Fahrzeug gemäß einem der Ansprüche 2 bis 5, **gekennzeichnet durch** eine Leistungs-Zuführungseinrichtung (18) zum Zuführen einer Leistung zu der Geschwindigkeits-Änderungs-Steuerungseinrichtung (17).

7. Das Fahrzeug gemäß Anspruch 6, **dadurch gekennzeichnet, dass** die Leistungs-Zuführungseinrichtung (18) das Zuführen der Leistung zu der Geschwindigkeits-Änderungs-Steuerungseinrichtung (17) aufrechterhält, um eine Geschwindigkeits-Änderungs-Steuerung fortzuführen, wenn die Fahrzeug-Geschwindigkeit größer ist als der vorgegebene Fahrzeug-Geschwindigkeits-Wert, nachdem die Antriebs-Kraft-Erzeugungseinrichtung (2) instruiert ist, anzuhalten, durch Schalten des ersten Schalters (18) in den "AUS"-Zustand.

8. Das Fahrzeug gemäß Anspruch 6 oder 7, **gekennzeichnet durch** einen zweiten Schalter (22), der zwischen der Leistungs-Zuführungseinrichtung (19) und der Geschwindigkeits-Änderungs-Steuerungseinrichtung (17) verbunden ist, und gemacht ist, um in einem "AN"-Zustand zu sein, in Erwiderung auf das Schalten des ersten Schalters in den "AN"-Zustand, wobei, wenn die Fahrzeug-Geschwindigkeit größer ist als der vorgegebene Fahrzeug-Geschwindigkeits-Wert, nachdem die Antriebs-Kraft-Erzeugungseinrichtung (2) instruiert ist, anzuhalten, durch Schalten des ersten Schalters in den "AUS"-Zustand, hält die Geschwindigkeits-Änderungs-Steuerungseinrichtung (17) einen "AN"-Zustand des zweiten Schalters (2) aufrecht und bringt den zweiten Schalter (22) in einen "AUS"-Zustand, wenn die Fahrzeug-Geschwindigkeit gleich oder kleiner wird als der vorgegebene Fahrzeug-Geschwindigkeits-Wert.

9. Fahrzeug gemäß einem der Ansprüche 2 bis 8, **dadurch gekennzeichnet, dass** der vorgegebene Fahrzeug-Geschwindigkeits-Wert der Fahrzeug-Geschwindigkeit null ist.

10. Das Fahrzeug gemäß Anspruch 1, **dadurch gekennzeichnet, dass** die Geschwindigkeits-Änderungs-Steuerungseinrichtung (17) kontinuierlich das Getriebe-Verhältnis steuert, durch Setzen eines Ziel-Getriebe-Verhältnisses des kontinuierlich variablen Getriebes (4) zu einem vorgegebenen Getriebe-Verhältniswert auf der niedrigen Seite, wenn das Getriebe-Verhältnis der vorgegebene Getriebe-Verhältniswert an der niedrigen Seite wird.

11. Fahrzeug gemäß einem der Ansprüche 1 bis 10, **dadurch gekennzeichnet, dass** das kontinuierlich variable Getriebe (4) eine erste Antriebs-Kraft-Übertragungseinrichtung (6), Übertragen mit einer Antriebs-Kraft von der Antriebs-Kraft-Erzeugungseinrichtung (2), und eine zweite Antriebs-Kraft-Übertragungseinrichtung (10), zum Übertragen der Antriebs-Kraft von der ersten Antriebs-Kraft-Übertragungseinrichtung (6) zu dem Antriebs-Rad (3), beinhaltet, wobei die Geschwindigkeits-Änderungs-Steuerungseinrichtung (17) das Getriebe-Verhältnis des kontinuierlich variablen Getriebes (4) kontinuierlich steuert, durch Erfassen der Drehung von zumindest einem von der ersten Antriebs-Kraft-Übertragungseinrichtung (6) und der zweiten Antriebs-Kraft-Übertragungseinrichtung (10).

12. Das Fahrzeug gemäß Anspruch 11, **dadurch gekennzeichnet, dass** die Geschwindigkeits-Änderungs-Steuerungseinrichtung (17) stoppt, das kontinuierlich variable Getriebe (4) zu steuern, wenn eine Dreh-Geschwindigkeit der ersten Antriebs-Kraft-Übertragungseinrichtung (6) gleich oder kleiner wird als ein vorgegebener Dreh-Geschwindigkeits-Wert der ersten Antriebs-Kraft-Übertragungseinrichtung (6), oder
die Geschwindigkeits-Änderungs-Steuerungseinrichtung (17) stoppt, das kontinuierlich variable Getriebe (4) zu steuern, wenn eine Dreh-Geschwindigkeit der zweiten Antriebs-Kraft-Übertragungseinrichtung (10) gleich oder kleiner wird als ein vorgegebener Dreh-Geschwindigkeits-Wert der zweiten Antriebs-Kraft-Übertragungseinrichtung (10).

13. Das Fahrzeug gemäß Anspruch 12, **gekennzeichnet durch** eine Kupplung (7), die an einer von zwischen der zweiten Antriebs-Kraft-Übertragungseinrichtung (10) und dem Antriebs-Rad (3) oder zwischen der Antriebs-Kraft-Erzeugungseinrichtung (2) und der ersten Antriebs-Kraft-Übertragungseinrichtung (6) angeordnet ist.

14. Das Fahrzeug gemäß Anspruch 13, **dadurch gekennzeichnet, dass** die Kupplung (7) zwischen der zweiten Antriebs-Kraft-Übertragungseinrichtung (10) und dem Antriebs-Rad (3) angeordnet ist, wobei die Geschwindigkeits-Änderungs-Steuerungseinrichtung (17) das kontinuierlich variable Getriebe (4) kontinuierlich steuert, durch Erfassen einer Drehung der Antriebs-Kraft-Erzeugungseinrichtung (2) und stoppt das kontinuierlich variable Getriebe (4) zu steuern, wenn eine Dreh-Geschwindigkeit der Antriebs-Kraft-Erzeugungseinrichtung (2) gleich oder kleiner wird als ein vorgegebener Dreh-Geschwindigkeits-Wert der Antriebs-Kraft-Erzeugungseinrichtung (2).

15. Das Fahrzeug gemäß Anspruch 14, **dadurch gekennzeichnet, dass** die Geschwindigkeits-Änderungs-Steuerungseinrichtung (17) stoppt das kontinuierlich variable Getriebe (4) zu steuern, wenn die Dreh-Geschwindigkeit der ersten Antriebs-Kraft-Übertragungseinrichtung (6) gleich oder kleiner wird als ein vorgegebener Dreh-Geschwindigkeits-Wert der ersten Antriebs-Kraft-Übertragungseinrichtung (6).

16. Das Fahrzeug gemäß Anspruch 13, **dadurch gekennzeichnet, dass** die Kupplung (7) zwischen der Antriebs-Kraft-Erzeugungseinrichtung (2) und der ersten Antriebs-Kraft-Übertragungseinrichtung (6) angeordnet ist, wobei die Geschwindigkeits-Änderungs-Steuerungseinrichtung (17) das kontinuierlich variable Getriebe (4) kontinuierlich steuert, durch Erfassen von Drehung der ersten Antriebs-Kraft-Übertragungseinrichtung (6).

17. Fahrzeug gemäß einem der Ansprüche 12 bis 16, **dadurch gekennzeichnet, dass** der vorgegebene Dreh-Geschwindigkeits-Wert von zumindest einem von der ersten Antriebs-Kraft-Übertragungseinrichtung (6), der zweiten Antriebs-Kraft-Übertragungseinrichtung (10) und der Antriebs-Kraft-Erzeugungseinrichtung (2) null ist.

18. Fahrzeug gemäß einem der Ansprüche 1 bis 17, **dadurch gekennzeichnet, dass** das kontinuierlich variable Getriebe (4) ein elektrisch gesteuertes Riemen-Typ-kontinuierlich-variables-Getriebe ist.

19. Fahrzeug gemäß Anspruch 18, **dadurch gekennzeichnet, dass** ein Riemenelement (11) des Riemen-Typ-kontinuierlich-variablen-Getriebes (4) durch ein Elastomer ausgebildet ist.

20. Fahrzeug gemäß einem der Ansprüche 11 bis 19, **dadurch gekennzeichnet, dass** die Geschwindigkeits-Änderungs-Steuerungseinrichtung (17) das Getriebe-Verhältnis des kontinuierlich variablen Getriebes (4) durch elektrisches Steuern von nur einem von der ersten Antriebs-Kraft-Übertragungseinrichtung (6) und der zweiten Antriebs-Kraft-Übertragungseinrichtung (10) steuert.

21. Verfahren zur Steuerung eines Fahrzeugs, insbesondere eines Motorrads, welches ein kontinuierlich variables Getriebe (4) und eine Geschwindigkeits-Änderungs-Steuerungseinrichtung (17) zum Steuern des Getriebe-Verhältnisses des kontinuierlich variablen Getriebes (4) hat, **dadurch gekennzeichnet, dass** ein Getriebe-Verhältnis des kontinuierlich variablen Getriebes (4) fortgesetzt wird, gesteuert zu sein, durch Halten einer Leistungs-Zufuhr zu der Geschwindigkeits-Änderungs-Steuerungseinrichtung (17), nachdem ein Motor (2) des Fahrzeugs instruiert ist, anzuhalten, während eines Fahr-Zustands des Motors (2),
die Steuerung des Getriebe-Verhältnisses ist angehalten durch Anhalten der Leistungs-Zufuhr zu der Geschwindigkeits-Änderungs-Steuerungseinrichtung (17), wenn die Fahrzeug-Geschwindigkeit null wird.

22. Verfahren gemäß Anspruch 21, **dadurch gekennzeichnet, dass** das Getriebe-Verhältnis geschaltet ist während der fortgesetzten Steuer-Periode zu der niedrigen Seite des Getriebes.

## Revendications

1. Véhicule, en particulier motocyclette, comprenant :
un moyen de génération de force d'entraînement (2) ;
un premier commutateur (18) pour la commande dudit moyen de génération de force d'entraînement (2) par un conducteur ;
une transmission variable en continu (4) pour la transmission d'une force d'entraînement générée par le moyen de génération de force d'entraînement (2) à une roue motrice (3), dans lequel ladite transmission variable en continu (4) est pourvue d'un appareil de changement de position de poulie (12) pour changer la position d'une poulie mobile (6b) d'une poulie primaire (6) de la transmission variable en continu (4) afin de changer le rapport de transmission de la transmission variable en continu (4) ; et
un moyen de commande de changement de vitesse (17) pour commander le rapport de transmission de la transmission variable en continu (4),
**caractérisé en ce que** ledit appareil de changement de position de poulie (12) change électriquement la position de la poulie mobile (6b), et ledit moyen de commande de changement de vitesse (17) est agencé pour commander en continu le rapport de transmission de la transmission variable en continu (4) après une instruction d'arrêt du moyen de génération de force d'entraînement (2) en commutant le premier commutateur (18) à un état « ARRÊT ».

2. Véhicule selon la revendication 1, **caractérisé en ce que** le moyen de commande de changement de vitesse (17) commande la transmission variable en continu (4) quand la vitesse du véhicule est supérieure à une valeur de vitesse de véhicule prédéterminée après une instruction d'arrêt du moyen de génération de force d'entraînement (2) en commutant le premier commutateur (18) à un état « ARRÊT ».

3. Véhicule selon la revendication 2, **caractérisé en ce que** le moyen de commande de changement de vitesse (17) commande la transmission variable en continu (4) sur base d'une table de commande de changement de vitesse quand la vitesse du véhicule est supérieure à la valeur de vitesse de véhicule prédéterminée après une instruction d'arrêt du moyen de génération de force d'entraînement (2) en commutant le premier commutateur (18) à l'état « ARRÊT ».

4. Véhicule selon la revendication 2, **caractérisé en ce que** le moyen de commande de changement de vitesse (17) règle un rapport de transmission cible pour la transmission variable en continu (4) à une valeur dans une plage basse quand la vitesse du véhicule est supérieure à la valeur de vitesse de véhicule prédéterminée après une instruction d'arrêt du moyen de génération de force d'entraînement (2) en commutant le premier commutateur (18) à un état « ARRÊT ».

5. Véhicule selon l'une des revendications 2 à 4, **caractérisé en ce que** quand le rapport de transmission atteint une valeur de rapport de transmission prédéterminée dans une plage basse après une instruction d'arrêt du moyen de génération de force d'entraînement (2) en commutant le premier commutateur (18) à l'état « ARRÊT », le moyen de commande de changement de vitesse (17) maintient le rapport de transmission prédéterminé dans la plage basse jusqu'à ce que la vitesse du véhicule soit inférieure ou égale à la valeur de vitesse de véhicule prédéterminée.

6. Véhicule selon l'une des revendications 2 à 5, **caractérisé par** un moyen d'alimentation (18) pour alimenter le moyen de commande de changement de vitesse (17).

7. Véhicule selon la revendication 6, **caractérisé en ce que** le moyen d'alimentation (18) maintient l'alimentation du moyen de commande de changement de vitesse (17) pour continuer une commande de changement de vitesse quand la vitesse du véhicule est supérieure à la valeur de vitesse de véhicule prédéterminée après une instruction d'arrêt du moyen de génération de force d'entraînement (2) en commutant le premier commutateur (18) à l'état « ARRÊT ».

8. Véhicule selon la revendication 6 ou 7, **caractérisé par** un deuxième commutateur (22) connecté entre le moyen d'alimentation (19) et le moyen de commande de changement de vitesse (17) et configuré pour être dans un état « MARCHE » en réponse à une commutation du premier commutateur à l'état « MARCHE », dans lequel, quand la vitesse du véhicule est supérieure à la valeur de vitesse de véhicule prédéterminée après une instruction d'arrêt du moyen de génération de force d'entraînement (2) en commutant le premier commutateur (18) à l'état « ARRÊT », le moyen de commande de changement de vitesse (17) maintient un état « MARCHE » du deuxième commutateur (22) et amène le deuxième commutateur (22) dans un état « ARRÊT » quand la vitesse du véhicule devient inférieure ou égale à la valeur de vitesse de véhicule prédéterminée.

9. Véhicule selon l'une des revendications 2 à 8, **caractérisé en ce que** la valeur de vitesse de véhicule prédéterminée est zéro.

10. Véhicule selon la revendication 1, **caractérisé en ce que** le moyen de commande de changement de vitesse (17) commande en continu le rapport de transmission en réglant un rapport de transmission cible de la transmission variable en continu (4) à un rapport de transmission prédéterminé dans une plage basse quand le rapport de transmission atteint la valeur de rapport de transmission prédéterminée dans la plage basse.

11. Véhicule selon l'une des revendications 1 à 10, **caractérisé en ce que** la transmission variable en continu (4) comprend un premier moyen de transmission de force d'entraînement (6) pour transmettre une force d'entraînement provenant du moyen de génération de force d'entraînement (2) et un deuxième moyen de transmission de force d'entraînement (10) pour transmettre la force d'entraînement du premier moyen de transmission de force d'entraînement (6) à la roue motrice (3), dans lequel le moyen de commande de changement de vitesse (17) commande en continu le rapport de transmission de la transmission variable en continu (4) en détectant la rotation d'au moins un moyen parmi le premier moyen de transmission de force d'entraînement (6) et le deuxième moyen de transmission de force d'entraînement (10).

12. Véhicule selon la revendication 11, **caractérisé en ce que** le moyen de commande de changement de vitesse (17) arrête de commander la transmission variable en continu (4) quand la vitesse de rotation du premier moyen de transmission de force d'entraînement (6) devient inférieure ou égale à une valeur de vitesse de rotation prédéterminée du premier moyen de transmission de force d'entraînement (6), ou le moyen de commande de changement de vitesse (17) arrête de commander la transmission variable en continu (4) quand la vitesse de rotation du deuxième moyen de transmission de force d'entraînement (10) devient inférieure ou égale à une valeur de vitesse de rotation prédéterminée du deuxième moyen de transmission de force d'entraînement (10).

13. Véhicule selon la revendication 12, **caractérisé par** un embrayage (7) agencé soit entre le deuxième moyen de transmission de force d'entraînement (10) et la roue motrice (3), soit entre le moyen de génération de force d'entraînement (2) et le premier moyen de transmission de force d'entraînement (6).

14. Véhicule selon la revendication 13, **caractérisé en ce que** l'embrayage (7) est agencé entre le deuxième moyen de transmission de force d'entraînement (10) et la roue motrice (3), dans lequel le moyen de commande de changement de vitesse (17) commande en continu la transmission variable en continu (4) en détectant une rotation du moyen de génération de force d'entraînement (2) et arrête de commander la transmission variable en continu (4) quand la vitesse de rotation du moyen de génération de force d'entraînement (2) devient inférieure ou égale à une valeur de vitesse de rotation prédéterminée du moyen de génération de force d'entraînement (2).

15. Véhicule selon la revendication 14, **caractérisé en ce que** le moyen de commande de changement de vitesse (17) arrête de commander la transmission variable en continu (4) quand la vitesse de rotation du premier moyen de transmission de force d'entraînement (6) devient inférieure ou égale à une valeur de vitesse de rotation prédéterminée du premier moyen de transmission de force d'entraînement (6).

16. Véhicule selon la revendication 13, **caractérisé en ce que** l'embrayage (7) est agencé entre le moyen de génération de force d'entraînement (2) et le premier moyen de transmission de force d'entraînement (6), dans lequel le moyen de commande de changement de vitesse (17) commande en continu la transmission variable en continu (4) en détectant une rotation du premier moyen de transmission de force d'entraînement (6).

17. Véhicule selon l'une des revendications 12 à 16, **caractérisé en ce que** la valeur de vitesse de rotation prédéterminée d'au moins un moyen parmi le premier moyen de transmission de force d'entraînement (6), le deuxième moyen de transmission de force d'entraînement (10) et le moyen de génération de force d'entraînement (2) est nulle.

18. Véhicule selon l'une des revendications 1 à 17, **caractérisé en ce que** la transmission variable en continu (4) est une transmission variable en continu du type à courroie commandée électriquement.

19. Véhicule selon la revendication 18, **caractérisé en ce que** un élément de courroie (11) de la transmission variable en continu du type à courroie (4) est constitué d'un élastomère.

20. Véhicule selon l'une des revendications 11 à 19, **caractérisé en ce que** le moyen de commande de changement de vitesse (17) commande le rapport de transmission de la transmission variable en continu (4) en commandant électriquement un seul moyen parmi le premier moyen de transmission de force d'entraînement (6) et le deuxième moyen de transmission de force d'entraînement (10).

21. Procédé de commande d'un véhicule, en particulier d'une motocyclette, comportant une transmission variable en continu (4) et un moyen de commande de changement de vitesse (17) pour commander le rapport de transmission de la transmission variable en continu (4),
**caractérisé en ce que**
un rapport de transmission de la transmission variable en continu (4) continue à être commandé en maintenant l'alimentation du moyen de commande de changement de vitesse (17) après une instruction d'arrêt d'un moteur (2) du véhicule durant un état de fonctionnement du moteur (2),
la commande du rapport de transmission est arrêtée en arrêtant l'alimentation du moyen de commande de changement de vitesse (17) quand la vitesse du véhicule devient nulle.

22. Procédé selon la revendication 21 **caractérisé en ce que** le rapport de transmission est changé durant la période de commande continuée vers la plage basse de la transmission.
